# EUROPÄISCHE PATENTSCHRIFT

(11) **EP 2 788 103 B1**
(45) Veröffentlichungstag und Bekanntmachung des Hinweises auf die Patenterteilung: **08.02.2017**
(21) Anmeldenummer: 12795427.9
(22) Anmeldetag: 03.12.2012
(51) Int. Cl.: B01D 46/00, B01D 46/46, B05B 15/12

(54) **FILTERANLAGE UND REINIGUNGSVERFAHREN FÜR ROHGAS ENTHALTEND LACK-OVERSPRAY**
FILTER SYSTEM AND PURIFICATION METHOD FOR CRUDE GAS CONTAINING PAINT OVERSPRAY
DISPOSITIF FILTRE ET PROCÉDÉ DE LAVAGE POUR GAZ BRUT CONTENANT DES SURPULVÉRISATIONS DE VERNIS

(30) Priorität: 09.12.2011 DE 102011056231
(43) Veröffentlichungstag der Anmeldung: 15.10.2014
(73) Patentinhaber: Dürr Systems AG, 74321 Bietigheim-Bissingen (DE)
(72) Erfinder: UETZ, Rainer, 71732 Tamm (DE); HOFMANN, Jens, 70732 Stuttgart (DE); HOLLER, Sebastian, 71732 Tamm (DE); WEISS, Sandra, 70569 Stuttgart (DE)
(74) Vertreter: Hoeger, Stellrecht & Partner Patentanwälte mbB
(86) Internationale Anmeldenummer: PCT/EP2012/074277
(87) Internationale Veröffentlichungsnummer: WO 2013/083529

(56) Entgegenhaltungen:
- DE-A1- 10 361 266
- DE-A1-102005 013 711
- DE-A1-102008 010 189
- US-A1- 2010 197 213

## Beschreibung

Die vorliegende Erfindung betrifft eine Filteranlage zum Reinigen eines mit Lack-Overspray beladenen Rohgasstroms, welche mindestens zwei Filterbereiche umfasst, die jeweils mindestens eine Filtervorrichtung umfassen, wobei zwei oder mehr Filtervorrichtungen jeweils
- mindestens ein Filterelement, welchem Filterhilfsmaterial und zumindest ein Teil des mit Lack-Overspray beladenen Rohgasstroms zum Reinigen desselben zuführbar ist,
- mindestens eine Einbringeinrichtung zum Einbringen von Filterhilfsmaterial oder eines Systems aus Lack-Overspray und Filterhilfsmaterial in den Rohgasstrom und
- mindestens eine Abreinigungsvorrichtung zum Abreinigen eines an mindestens einem Filterelement der mindestens einen Filtervorrichtung abgeschiedenen Systems aus Lack-Overspray und Filterhilfsmaterial
umfassen.

Für den Betrieb einer solchen Filteranlage kann beispielsweise eine übergeordnete Steuerung vorgesehen sein, mittels welcher vorgegebene Aktionen in einer vorgegebenen Reihenfolge durchführbar sind.

Die US 2010/0197213 A1 offenbart eine Lackieranlage mit einer Filteranlage gemäß dem Oberbegriff von Anspruch 1.

Der vorliegenden Erfindung liegt die Aufgabe zugrunde, eine Filteranlage bereitzustellen, welche einfach, zuverlässig und flexibel betreibbar ist.

Diese Aufgabe wird bei der eingangs genannten Filteranlage erfindungsgemäß durch die Merkmale des kennzeichnenden Teils von Anspruch 1 gelöst.

Dadurch, dass die Filteranlage eine Koordinierungsvorrichtung umfasst, mittels welcher mindestens zwei Aktionen mindestens zweier verschiedener Filtervorrichtungen miteinander koordinierbar sind, können verschiedene Betriebszustände der Filtervorrichtungen bei der Durchführung der Aktionen einfach berücksichtigt werden und somit ein zuverlässiger und flexibler Betrieb der Filteranlage ermöglicht werden.

Unter einer "Aktion" ist in dieser Beschreibung und den beigefügten Ansprüchen insbesondere Folgendes zu verstehen:
- ein Einbringvorgang, bei welchem Filterhilfsmaterial oder ein System aus Lack-Overspray und Filterhilfsmaterial in einer Filtervorrichtung in den Rohgasstrom eingebracht wird;
- ein Abreinigungsvorgang, bei welchem ein an mindestens einem Filterelement der Filtervorrichtung abgeschiedenes System aus Lack-Overspray und Filterhilfsmaterial von dem mindestens einen Filterelement abgereinigt wird;
- ein Zuführvorgang, bei welchem der Filtervorrichtung frisches Filterhilfsmaterial oder ein, insbesondere aufbereitetes, System aus Lack-Overspray und Filterhilfsmaterial zugeführt wird; und/oder
- ein Entnahmevorgang, bei welchem zumindest ein Teil des Systems aus Lack-Overspray und Filterhilfsmaterial aus der Filtervorrichtung entnommen und abgeführt wird.

Ein System aus Lack-Overspray und Filterhilfsmaterial kann beispielsweise ein Gemisch aus Lack-Overspray-Partikeln und Filterhilfsmaterialpartikeln sein. Insbesondere ist ein System aus Lack-Overspray und Filterhilfsmaterial durch Konglomerate und/oder Agglomerate aus Lack-Overspray-Partikeln, insbesondere Lacktröpfchen, und Filterhilfsmaterialpartikeln, insbesondere Steinmehlkörnchen, gebildet.

Ein System aus Lack-Overspray und Filterhilfsmaterial kann beispielsweise im Wesentlichen ausschließlich aus Agglomeraten und/oder Konglomeraten aus Lack-Overspray-Partikeln und Filterhilfsmaterialpartikeln bestehen.

Ferner kann ein System aus Lack-Overspray und Filterhilfsmaterial durch aufbereitetes Filterhilfsmaterial, insbesondere ein aufbereitetes System aus Lack-Overspray und Filterhilfsmaterial, gebildet sein.

Ferner kann ein System aus Lack-Overspray und Filterhilfsmaterial eine Mischung aus frischem (unverbrauchtem), nicht mit Lack-Overspray beladenem Filterhilfsmaterial, aus Agglomeraten und/oder Konglomeraten aus Lack-Overspray-Partikeln und Filterhilfsmaterialpartikeln und/oder aus aufbereitetem Filterhilfsmaterial sein.

Als Filterhilfsmaterial kann insbesondere jedes Medium verwendet werden, welches dazu in der Lage ist, einen Flüssigkeitsanteil des Lack-Overspray aufzunehmen.

Insbesondere kommen als Filterhilfsmaterialien beispielsweise Kalk, Steinmehl, insbesondere Kalksteinmehl, Aluminiumsilikate, Aluminiumoxide, Siliziumoxide, Pulverlack oder Ähnliches in Betracht.

Alternativ oder ergänzend hierzu können als Filterhilfsmaterial zur Aufnahme und/oder Bindung des Lack-Overspray auch Partikel mit einer Hohlraumstruktur und relativ zu ihren Außenabmessungen großer innerer Oberfläche verwendet werden. Beispielsweise können natürliche und/oder synthetische Zeolithe oder andere hohle, beispielsweise kugelförmige, Körper aus Polymeren, Glas oder Aluminiumsilikat und/oder natürliche oder synthetisch erzeugte Fasern verwendet werden.

Als Zeolithe werden insbesondere Alumino-Silikate bezeichnet, welche die allgemeine Summenformel Mⁿ⁺_{x/n}[(AlO₂)^{x-}(SiO₂)^{y}] · z H₂O aufweisen (Mⁿ⁺: Metallkation; x/n: stöchiometrischer Faktor, der sich aus der Ladung des Kations und der des Aluminat-Anions ergibt (= "Modul")). Es können beispielsweise Calcium-, Magnesium-, Calcium-Magnesium-, Natrium- und/oder Kalium-Zeolithe verwendet werden. Vorzugsweise werden Mischungen aus zwei oder mehreren dieser Zeolitharten verwendet.

Alternativ oder ergänzend hierzu können als Filterhilfsmaterial zur Aufnahme und/oder Bindung des Lack-Overspray auch chemisch mit dem Overspray reagierende Partikel verwendet werden. Beispielsweise können chemisch reaktive Partikel mit Amin-, Epoxid-, Carboxyl-, Hydroxyl- oder Isocyanat-Gruppen, chemisch reaktive Partikel aus mit Octylsilan nachbehandeltem Aluminiumoxid oder feste oder flüssige Mono-, Oligo- oder Polymere, Silane, Silanole oder Siloxane verwendet werden.

Das Filterhilfsmaterial besteht vorzugsweise aus einer Vielzahl von Filterhilfsmaterial-Partikeln, welche insbesondere einen mittleren Durchmesser im Bereich von ungefähr 10 µm bis ungefähr 100 µm aufweisen.

Das Filterhilfsmaterial ist insbesondere ein fließfähiges, partikelförmiges Material, welches auch als "Precoat"-Material bezeichnet wird.

Das Filterhilfsmaterial dient insbesondere dazu, sich als Sperrschicht an der Oberfläche des Filterelements abzusetzen, um zu verhindern, dass diese Oberfläche durch anhaftende Lack-Overspray-Partikel verklebt. Durch periodisches Abreinigen des Filterelements gelangt das System aus Filterhilfsmaterial und Lack-Overspray von dem Filterelement in den Aufnahmebehälter.

Mindestens eine Filtervorrichtung ist vorzugsweise als regenerierbare Filtervorrichtung ausgebildet.

Unter einer regenerierbaren Filtervorrichtung ist eine Abtrennvorrichtung zum Abtrennen von Verunreinigungen aus einem durch die Lackierkabine geführten Gasstrom zu verstehen, bei welcher abgeschiedene Verunreinigungen abgereinigt werden können, ohne Filterelemente der Filtervorrichtung austauschen zu müssen. Insbesondere kann hiermit Lack-Overspray aus einem Overspraypartikel enthaltenden Gasstrom abgetrennt werden.

Als eine regenerierbare Filtervorrichtung (Filteranordnung) ist insbesondere auch eine Filtervorrichtung vorgesehen, die eines oder mehrere Trockenfilterelemente und/oder eine oder mehrere Trockenabscheidungsvorrichtungen aufweist, bei denen eine Reinigung eines Gasstromes im Wesentlichen ohne die Zugabe einer Flüssigkeit an den Filterelementen erfolgt. Davon unabhängig können nachfolgende oder vorgelagerte Reinigungsstufen wiederum unter Verwendung von (bei Normalbedingungen) flüssigen Löse- oder Reinigungsmitteln vorgesehen sein.

Unabhängig von der Reinigungsfunktion eines Trockenfilterelements und/oder einer Trockenabscheidungsvorrichtung, welche ohne die Zugabe einer Flüssigkeit erfolgt, kann vorgesehen sein, dass mindestens ein Trockenfilterelement und/oder mindestens eine Trockenabscheidungsvorrichtung zur Reinigung derselben mit einer Flüssigkeit beaufschlagt werden. Insbesondere zum Entfernen eines Filterkuchens aus Lack-Overspray und Filterhilfsmaterial kann beispielsweise eine Reinigungsflüssigkeit verwendet werden. Eine Reinigung mindestens eines Trockenfilterelements und/oder mindestens einer Trockenabscheidungsvorrichtung kann somit nass erfolgen, während ein Abscheidebetrieb/Filterbetrieb vorzugsweise trocken erfolgt.

Bei einer regenerierbaren Filtervorrichtung kann vorgesehen sein, dass die Filtervorrichtung mindestens ein Filterelement umfasst, welches im Filterbetrieb mit einer Sperrschicht und/oder einer Schutzschicht versehen ist, welche Filterhilfsmaterial, insbesondere Steinmehl, vorzugsweise Kalksteinmehl, und/oder natürliche und/oder synthetische Zeolithe, umfasst.

Auf diese Weise kann im Filterbetrieb der Filtervorrichtung verhindert werden, dass sich das Filterelement mit Verunreinigungen aus dem der Filtervorrichtung zugeführten Gasstrom zusetzt. Durch eine Abreinigung der Sperrschicht bzw. Schutzschicht von dem Filterelement der Filtervorrichtung kann eine besonders einfache Regeneration des Filterelements erfolgen, welches anschließend durch Aufbringen einer frischen Sperrschicht bzw. einer frischen Schutzschicht erneut verwendbar ist.

Als Lack kommt insbesondere Pulverlack oder Fluidlack in Betracht.

Mit dem Begriff "Fluidlack" wird dabei - im Unterschied zum Begriff "Pulverlack" - ein Lack mit einer fließfähigen Konsistenz, von flüssig bis pastös (beispielsweise im Falle eines PVC-Plastisols), bezeichnet. Der Begriff "Fluidlack" umfasst insbesondere die Begriffe "Flüssiglack" und "Nasslack".

Bei der Verwendung von Fluidlack ist der Lack-Overspray aus der Lackierkabine somit ein Fluidlack-Overspray, bei der Verwendung von Nasslack ein Nasslack-Overspray.

Bei einer Ausgestaltung der Erfindung ist vorgesehen, dass jedem Filterbereich eine Bereichssteuervorrichtung zugeordnet ist, mittels welcher die mindestens eine Filtervorrichtung des jeweiligen Filterbereichs im Wesentlichen unabhängig von der mindestens einen Filtervorrichtung des mindestens einen weiteren Filterbereichs steuerbar und/oder regelbar ist.

Alternativ oder ergänzend hierzu kann vorgesehen sein, dass mehreren Filterbereichen eine gemeinsame Bereichssteuervorrichtung zugeordnet ist, mittels welcher eine Filtervorrichtung eines jeweiligen Filterbereichs im Wesentlichen unabhängig von einer Filtervorrichtung mindestens eines weiteren Filterbereichs steuerbar und/oder regelbar ist.

Günstig kann es sein, wenn mindestens ein Filterbereich vorgesehen ist, welcher mindestens zwei Filtervorrichtungen umfasst.

Vorzugsweise ist vorgesehen, dass mindestens eine Filtervorrichtung des jeweiligen Filterbereichs mittels der zugeordneten Bereichssteuervorrichtung hinsichtlich eines Einbringvorganges und/oder hinsichtlich eines Abreinigungsvorganges im Wesentlichen unabhängig von der mindestens einen Filtervorrichtung des mindestens einen weiteren Filterbereichs steuerbar und/oder regelbar ist. Bei einem Einbringvorgang wird Filterhilfsmaterial oder ein System aus Lack-Overspray und Filterhilfsmaterial in den Rohgasstrom eingebracht. Bei einem Abreinigungsvorgang wird ein an mindestens einem Filterelement abgeschiedenes System aus Lack-Overspray und Filterhilfsmaterial von dem mindestens einen Filterelement abgereinigt.

Die Aktionen, welche mittels einer Bereichssteuervorrichtung gesteuert und/oder geregelt werden, werden auch als "Bereichsaktionen" bezeichnet.

Bereichsaktionen sind somit vorzugsweise ein Einbringvorgang und/oder ein Abreinigungsvorgang.

Die Bereichssteuervorrichtung ist vorzugsweise ein Bestandteil der Koordinierungsvorrichtung oder eine separate Vorrichtung, welche von der Koordinierungsvorrichtung ansteuerbar, insbesondere initiierbar, ist.

Vorzugsweise umfasst die Filteranlage die mindestens zwei Bereichssteuervorrichtungen.

Jeder Filtervorrichtung ist vorzugsweise eine Filtervorrichtungssteuerung zugeordnet, mittels welcher eine von der Bereichssteuervorrichtung und/oder der Koordinierungsvorrichtung initiierte Aktion der jeweiligen Filtervorrichtung durchführbar ist.

Beispielsweise ist mittels der Filtervorrichtungssteuerung ein Abreinigungsvorgang bei einer Filtervorrichtung steuerbar und/oder regelbar. Insbesondere ist ein solcher Abreinigungsvorgang für mehrere, vorzugsweise sämtliche, Filterelemente der Filtervorrichtung mittels der Filtervorrichtungssteuerung steuerbar und/oder regelbar. Die Abreinigung erfolgt dabei vorzugsweise derart, dass die einzelnen Filterelemente der Filtervorrichtung nicht gleichzeitig, sondern nacheinander abgereinigt werden. Die Reihenfolge, in welcher die Filterelemente abgereinigt werden, ist vorzugsweise nicht diejenige, in welcher die Filterelemente in der Filtervorrichtung angeordnet sind, sondern vorzugsweise im Wesentlichen quasichaotisch. Insbesondere kann vorgesehen sein, dass die Filterelemente derart nacheinander abgereinigt werden, dass zwischen zwei nacheinander abgereinigten Filterelementen jeweils mindestens ein weiteres Filterelement angeordnet ist.

Ein Einbringvorgang und/oder ein Abreinigungsvorgang erfolgt vorzugsweise regelmäßig. Insbesondere erfolgt ein Einbringvorgang und/oder ein Abreinigungsvorgang nach einer Zeitvorgabe und/oder in Abhängigkeit von einem Ergebnis einer durchgeführten Messung, insbesondere einer Messung eines Beladungsgrades des Systems aus Lack-Overspray und Filterhilfsmaterial mit Lack-Overspray.

Vorzugsweise sind die Abreinigungsvorgänge und/oder die Einbringvorgänge in mindestens einer Filtervorrichtung mittels der Filtervorrichtungssteuerungen derart steuerbar und/oder regelbar, dass sie nach einer Initiierung durch die Bereichssteuervorrichtungen und/oder die Koordinierungsvorrichtung autonom in der mindestens einen Filtervorrichtung durchführbar sind. Vorzugsweise erfolgt kein weiterer Steuereingriff und/oder Regeleingriff durch die Bereichssteuervorrichtung und/oder die Koordinierungsvorrichtung, sobald ein Abreinigungsmodus und/oder Einbringmodus einer Filtervorrichtung aktiviert wurde.

Vorzugsweise sind sämtliche Filtervorrichtungssteuerungen im Wesentlichen identisch ausgebildet.

Ferner sind vorzugsweise sämtliche Bereichssteuervorrichtungen im Wesentlichen identisch ausgebildet.

Vorteilhaft kann es sein, wenn die Filteranlage eine Zuführvorrichtung zur Zuführung von Filterhilfsmaterial zu den Filtervorrichtungen umfasst. Mittels der Zuführvorrichtung ist insbesondere ein Zuführvorgang durchführbar.

Die Zuführvorrichtung kann ein Gebläse oder einen Schneckenförderer zum Fördern von Filterhilfsmaterial umfassen.

Filterhilfsmaterial kann frisches, unbeladenes Filterhilfsmaterial oder ein, beispielsweise aufbereitetes, System aus Lack-Overspray und Filterhilfsmaterial sein.

Die Zuführung von Filterhilfsmaterial und/oder eines Systems aus Lack-Overspray und Filterhilfsmaterial zu mindestens einer Filtervorrichtung wird auch als Befüllung der Filtervorrichtung bezeichnet.

Insbesondere kann vorgesehen sein, dass mittels einer Zuführvorrichtung Filterhilfsmaterial oder ein System aus Lack-Overspray und Filterhilfsmaterial von einem Versorgungsbehälter mindestens einer Filtervorrichtung zugeführt wird. Ein Versorgungsbehälter ist beispielsweise ein Behälter zur Aufnahme von frischem, nicht mit Lack-Overspray beladenem Filterhilfsmaterial oder ein Versorgungsbehälter zur Aufnahme eines, insbesondere aufbereiteten, Systems aus Lack-Overspray und Filterhilfsmaterial.

Vorteilhaft kann es sein, wenn ein Versorgungsbehälter zentral für mehrere Filteranlagen vorgesehen ist.

Vorzugsweise umfasst die Filteranlage eine Schnittstellenvorrichtung zur Kommunikation mit dem Versorgungsbehälter. Insbesondere kann hierbei eine Kommunikation mit der Zuführvorrichtung vorgesehen sein. Auf eine Kommunikation des Versorgungsbehälters mit der Koordinierungsvorrichtung wird vorzugsweise verzichtet.

Ferner kann vorgesehen sein, dass die Filteranlage eine Schnittstellenvorrichtung zur Kommunikation zwischen dem Versorgungsbehälter und einem Versorgungsfahrzeug, beispielsweise einem Lastkraftwagen, umfasst.

Mittels der Zuführvorrichtung ist vorzugsweise mehreren Filtervorrichtungen nacheinander Filterhilfsmaterial und/oder ein System aus Lack-Overspray und Filterhilfsmaterial zuführbar.

Vorzugsweise wird nicht zwei oder mehreren Filtervorrichtungen gleichzeitig Filterhilfsmaterial oder ein System aus Lack-Overspray und Filterhilfsmaterial zugeführt, das heißt, dass vorzugsweise nicht zwei oder mehrere Filtervorrichtungen gleichzeitig befüllt werden.

Es kann jedoch auch vorteilhaft sein, wenn mehrere Filtervorrichtungen gleichzeitig befüllt werden. Insbesondere kann vorgesehen sein, dass ein Befüllungsvorgang (Zuführvorgang) bei einer Filtervorrichtung gestartet wird, während ein Befüllungsvorgang bei einer weiteren Filtervorrichtung noch im Gange ist, so dass sich mindestens zwei Befüllungsvorgänge zeitlich überschneiden.

Vorteilhaft kann es sein, wenn die Filteranlage eine Entnahmevorrichtung zur Entnahme von zumindest einem Teil des Systems aus Lack-Overspray und Filterhilfsmaterial aus den Filtervorrichtungen umfasst. Mittels einer Entnahmevorrichtung ist insbesondere ein Entnahmevorgang durchführbar, welcher auch als "Entleerung" bezeichnet wird.

Die Entnahmevorrichtung umfasst vorzugsweise ein Gebläse oder einen Schneckenförderer zum Fördern des Systems aus Lack-Overspray und Filterhilfsmaterial.

Mittels der Entnahmevorrichtung ist das System aus Lack-Overspray und Filterhilfsmaterial zumindest teilweise aus mindestens einer Filtervorrichtung entnehmbar und vorzugsweise einem Entsorgungsbehälter zuführbar, welcher der Aufnahme des zur Entsorgung vorgesehenen Systems aus Lack-Overspray und Filterhilfsmaterial dient.

Grundsätzlich kann ein Entsorgungsbehälter zentral für mehrere Filteranlagen vorgesehen sein.

Vorzugsweise umfasst die Filteranlage eine Schnittstellenvorrichtung zur Kommunikation mit dem Entsorgungsbehälter. Insbesondere kann hierbei eine Kommunikation des Entsorgungsbehälters mit der Entnahmevorrichtung vorgesehen sein. Auf eine Kommunikation des Entsorgungsbehälters mit der Koordinierungsvorrichtung wird vorzugsweise verzichtet.

Ferner kann vorgesehen sein, dass die Filteranlage eine Schnittstellenvorrichtung zur Kommunikation des Entsorgungsbehälters mit einem Entsorgungsfahrzeug, beispielsweise einem Lastkraftwagen, umfasst.

Vorteilhaft kann es sein, wenn die Filteranlage eine Aufbereitungsvorrichtung zur Aufbereitung des Systems aus Lack-Overspray und Filterhilfsmaterial umfasst. Mittels der Aufbereitungsvorrichtung ist insbesondere ein Aufbereitungsvorgang durchführbar.

Eine Aufbereitungsvorrichtung ermöglicht insbesondere die Wiederverwendung des Systems aus Lack-Overspray und Filterhilfsmaterial.

Vorteilhaft kann es hierzu sein, wenn das mittels der Entnahmevorrichtung entnommene System aus Lack-Overspray und Filterhilfsmaterial der Aufbereitungsvorrichtung und nach der Aufbereitung desselben einem Versorgungsbehälter zuführbar ist. Aus dem Versorgungsbehälter ist das aufbereitete System aus Lack-Overspray und Filterhilfsmaterial vorzugsweise schließlich erneut mindestens einer Filtervorrichtung zuführbar.

Mittels der Entnahmevorrichtung ist vorzugsweise aus mehreren Filtervorrichtungen nacheinander zumindest ein Teil des Systems aus Lack-Overspray und Filterhilfsmaterial entnehmbar.

Vorzugsweise wird nicht gleichzeitig aus zwei oder mehreren Filtervorrichtungen das jeweils darin enthaltene System aus Lack-Overspray und Filterhilfsmaterial entnommen, das heißt, dass vorzugsweise nicht zwei oder mehrere Filtervorrichtungen gleichzeitig entleert werden.

Es kann jedoch auch vorteilhaft sein, wenn mehrere Filtervorrichtungen gleichzeitig entleert werden. Insbesondere kann vorgesehen sein, dass ein Entleerungsvorgang (Entnahmevorgang) bei einer Filtervorrichtung gestartet wird, während ein Entleerungsvorgang bei einer weiteren Filtervorrichtung noch im Gange ist, so dass sich mindestens zwei Entleerungsvorgänge zeitlich überschneiden.

Vorzugsweise umfasst die Filteranlage eine oder mehrere Pneumatikvorrichtungen zur Bereitstellung von Druckluft, insbesondere eine gemeinsame Pneumatikvorrichtung für den Betrieb eines oder mehrerer Filterbereiche sowie für den Betrieb der Zuführvorrichtung und/oder der Entnahmevorrichtung.

Die Aktionen der Filtervorrichtungen, der Zuführvorrichtung und/oder der Entnahmevorrichtung werden vorzugsweise unter Verwendung von Druckluft durchgeführt und können daher als Pneumatikaktionen bezeichnet werden.

Die mittels der Koordinierungsvorrichtung miteinander koordinierbaren mindestens zwei Aktionen zweier verschiedener Filtervorrichtungen sind vorzugsweise druckluftbetätigte oder druckluftnutzende Aktionen.

Vorzugsweise sind elektrische Aktionen unabhängig von den druckluftbetätigten oder druckluftnutzenden Aktionen durchführbar.

Vorteilhaft kann es aber auch sein, wenn elektrische Aktionen mittels der Koordinierungsvorrichtung, mittels der Bereichssteuervorrichtungen und/oder mittels der Filtervorrichtungssteuerungen steuerbar und/oder regelbar, insbesondere koordinierbar und verwaltbar, sind. Insbesondere kann der Antrieb von Paddelmischern etc. eine elektrische Aktion sein.

Die Pneumatikvorrichtung umfasst vorzugsweise eine Drucklufterzeugungsvorrichtung zur Erzeugung von Druckluft und eine Druckluftverteilungsvorrichtung zur Verteilung der erzeugten Druckluft auf mit Druckluft betriebene Vorrichtungen der Filteranlage.

Bei einer Ausgestaltung der Erfindung ist vorgesehen, dass die Filteranlage eine Pneumatikvorrichtung umfasst, welche mittels der Koordinierungsvorrichtung, den Bereichssteuervorrichtungen und/oder den Filtervorrichtungssteuerungen steuerbar und/oder regelbar ist. Insbesondere ist mittels der Koordinierungsvorrichtung, den Bereichssteuervorrichtungen und/oder den Filtervorrichtungssteuerungen eine Druckluftverteilungsvorrichtung, insbesondere Ventile der Druckluftverteilungsvorrichtung, steuerbar und/oder regelbar. Die Filteranlage umfasst eine Zuführvorrichtung zur Zuführung von Filterhilfsmaterial zu mindestens einer Filtervorrichtung und/oder eine Entnahmevorrichtung zur Entnahme von zumindest einem Teil des Systems aus Lack-Overspray und Filterhilfsmaterial aus mindestens einer Filtervorrichtung wobei mittels der Koordinierungsvorrichtung die Zuführung und/oder die Entnahme für die Filtervorrichtungen mehrerer Filterbereiche der Filteranlage koordinierbar ist.

Insbesondere kann vorgesehen sein, dass sämtliche Filtervorrichtungen sämtlicher Filterbereiche mittels der Koordinierungsvorrichtung in Bezug auf einen oder mehrere Zuführvorgänge und/oder einen oder mehrere Entnahmevorgänge koordinierbar sind.

Vorzugsweise ist mittels der Koordinierungsvorrichtung eine zentrale Koordination durchführbar, wobei die Entnahmevorgänge und die Zuführvorgänge zeitlich nacheinander durchgeführt werden. Insbesondere werden die Entnahmevorgänge ebenso wie die Zuführvorgänge voneinander zeitlich getrennt, beispielsweise sequentiell beziehungsweise seriell abgearbeitet.

Die Aktionen "Entnahmevorgang" und "Zuführvorgang" werden auch als "Anlagenaktionen" bezeichnet, weil diese vorzugsweise über die gesamte Filteranlage hinweg koordiniert werden. Die Bereichsaktionen hingegen werden vorzugsweise lediglich über den jeweiligen Filterbereich hinweg koordiniert.

Die Anlagenaktionen sind somit vorzugsweise mittels der Koordinierungsvorrichtung koordinierbar, während die Bereichsaktionen vorzugsweise mittels der Bereichssteuervorrichtungen koordinierbar sind.

Erfindungsgemäß ist vorgesehen, dass mittels der Koordinierungsvorrichtung erfassbar ist, ob ein Beladungsgrad des Systems aus Lack-Overspray und Filterhilfsmaterial mit Lack-Overspray in mindestens einer Filtervorrichtung einen vorgegebenen Grenzwert übersteigt, wobei mittels der Koordinierungsvorrichtung ein zumindest teilweiser Austausch des Systems aus Lack-Overspray und Filterhilfsmaterial in mindestens zwei Filtervorrichtungen in derjenigen Reihenfolge steuerbar und/oder regelbar ist, in welcher ein Übersteigen des Grenzwertes für den Beladungsgrad bei den einzelnen Filtervorrichtungen erfasst wird. Auf diese Weise kann ein flexibler, an den tatsächlichen Bedarf angepasster Austausch des Systems aus Lack-Overspray und Filterhilfsmaterial in den Filtervorrichtungen realisiert werden.

Ein Austausch des Systems aus Lack-Overspray und Filterhilfsmaterial in einer Filtervorrichtung wird vorzugsweise durch Entnahme des vorhandenen Systems aus Lack-Overspray aus der Filtervorrichtung und Zuführung von frischem und/oder aufbereitetem Filterhilfsmaterial zu der Filtervorrichtung durchgeführt.

Insbesondere dann, wenn die Zuführung und/oder die Entnahme mittels Druckluft erfolgt, kann durch die Koordination der Aktionen eine Pneumatikvorrichtung zur Bereitstellung der Druckluft zuverlässig betrieben werden. Insbesondere ist die Pneumatikvorrichtung hierdurch vor einer Überlastung und/oder einem unerwünschten Einbrechen des Luftdrucks geschützt.

Vorzugsweise erfolgt eine Koordinierung eines Entnahmevorgangs und/oder eines Zuführvorgangs gemäß dem FIFO-Prinzip (First In First Out), wonach die Filtervorrichtungen, in denen ein Grenzwert für den Beladungsgrad überschritten wurde, sich bei der Koordinierungsvorrichtung zum Austausch des Systems aus Lack-Overspray und Filterhilfsmaterial anmelden. Die Entnahmevorgänge und Zuführvorgänge zur Entleerung bzw. Befüllung der einzelnen Filtervorrichtungen werden dann in der Reihenfolge der Anmeldung der Filtervorrichtungen durchgeführt.

Insbesondere werden lediglich an den vorderen beiden Plätzen in der Reihe (FIFO-Plätze 1 und 2) Entnahmevorgänge und Zuführvorgänge durchgeführt. Beispielsweise kann dann, wenn bei der Filtervorrichtung auf FIFO-Platz 1 ein Zuführvorgang durchgeführt wird, bei der Filtervorrichtung auf FIFO-Platz 2 ein Entnahmevorgang durchgeführt werden.

Auf den vorderen beiden (FIFO-)Plätzen in der Anmeldungsreihenfolge werden vorzugsweise Anlagenaktionen durchgeführt. Auf dem (FIFO-)Platz 3 wird vorzugsweise überprüft, ob vor einem Entnahmevorgang ein zusätzlicher Abreinigungsvorgang durchgeführt werden muss, um einen möglichst vollständigen Austausch des Systems aus Lack-Overspray und Filterhilfsmaterial durchführen zu können.

Auf dem in der Anmeldungsreihenfolge darauffolgenden Platz 4 und sämtlichen weiteren Plätzen werden die Filtervorrichtungen vorzugsweise in dem Abreinigungsmodus und Einbringmodus betrieben, das heißt, dass auf dem FIFO-Platz 4 und den darauffolgenden Plätzen Bereichsaktionen durchgeführt werden.

Vorzugsweise wird, wenn auf FIFO-Platz 1 der Zuführvorgang abgeschlossen ist, bei der betreffenden Filtervorrichtung der Abreinigungsmodus und Einbringmodus initiiert und die Filtervorrichtung aus der Anmeldungsreihenfolge entfernt. Die in der Anmeldungsreihenfolge auf diese Filtervorrichtung folgenden Filtervorrichtungen werden vorzugsweise um jeweils einen Platz nach vorne verschoben. Die zuvor auf FIFO-Platz 2 entleerte Filtervorrichtung wird dann insbesondere auf FIFO-Platz 1 befüllt. Die auf FIFO-Platz 3 zuvor abgereinigte Filtervorrichtung wird insbesondere auf FIFO-Platz 2 entleert, etc.

Bei einer Ausgestaltung der Erfindung ist vorgesehen, dass jeder Filtervorrichtung, der Zuführvorrichtung und/oder der Entnahmevorrichtung jeweils eine Schnittstellenvorrichtung zur Kommunikation mit der Koordinierungsvorrichtung und/oder der Bereichssteuervorrichtung zugeordnet ist, wobei mittels der Schnittstellenvorrichtungen insbesondere Aktionsfreigabesignale, Sollwerte, Grenzwerte und/oder Kontrollwerte von und/oder zu der Koordinierungsvorrichtung und/oder der Bereichssteuervorrichtung übertragbar sind.

Auf der Seite der Filtervorrichtungen, der Zuführvorrichtung und/oder der Entnahmevorrichtung sind vorzugsweise In-Out-Variablen (Pointer) vorgesehen. Auf der Seite der Koordinierungsvorrichtung und/oder der Bereichssteuervorrichtungen sind vorzugsweise Speicherbereiche, insbesondere STAT-Variable Instance-Areas, vorgesehen.

Vorzugsweise ist für jede Filtervorrichtung, für die Zuführvorrichtung und/oder für die Entnahmevorrichtung jeweils ein, insbesondere separater, Speicherbereich (Speicherplatz) in der Koordinierungsvorrichtung und/oder in den Bereichssteuervorrichtungen vorgesehen.

Bei einer Ausgestaltung der Erfindung ist vorgesehen, dass die Filteranlage mindestens eine Kontrollvorrichtung umfasst, mittels welcher ein Beladungsgrad des Systems aus Lack-Overspray und Filterhilfsmaterial mit Lack-Overspray, ein zeitlicher Verlauf des Beladungsgrades des Systems aus Lack-Overspray und Filterhilfsmaterial mit Lack-Overspray und/oder ein von dem Beladungsgrad verschiedener, insbesondere im Wesentlichen unabhängiger, Parameter des Systems aus Lack-Overspray und Filterhilfsmaterial ermittelbar ist, insbesondere um die Notwendigkeit eines Austauschs des Systems aus Lack-Overspray und Filterhilfsmaterial in einer bestimmten Filtervorrichtung zu ermitteln.

Günstig kann es sein, wenn mittels der Kontrollvorrichtung ein Beladungsgrad im laufenden Reinigungsbetrieb (Filterbetrieb) der Filtervorrichtung durchführbar ist.

Alternativ oder ergänzend hierzu kann es günstig sein, wenn mittels der Kontrollvorrichtung ein Beladungsgrad bei oder nach der Durchführung eines Entnahmevorgangs, bei welchem das System aus Lack-Overspray und Filterhilfsmaterial zumindest teilweise aus einer Filtervorrichtung entnommen wird, ermittelt wird.

Insbesondere dann, wenn ein Austauschvorgang in Abhängigkeit von einer vorgegebenen Anzahl an lackierten Werkstücken initiiert wird, kann mittels einer Ermittlung des Beladungsgrades bei dem Austauschvorgang ermittelt werden, ob ein Austausch des Systems aus Lack-Overspray und Filterhilfsmaterial zu früh, das heißt mit noch zu geringem Beladungsgrad, oder zu spät, das heißt mit zu hohem Beladungsgrad initiiert wurde. Mittels einer Rückmeldung für die Kontrollvorrichtung kann dann eine Korrektur des vorgegebenen Wertes für die Anzahl an lackierten Werkstücken bis zum nächsten Austausch des Systems aus Lack-Overspray und Filterhilfsmaterial erfolgen.

Der vorliegenden Erfindung liegt die weitere Aufgabe zugrunde, ein Verfahren zum Reinigen eines mit Lack-Overspray beladenen Rohgasstroms bereitzustellen, welches einfach, zuverlässig und flexibel durchführbar ist.

Diese Aufgabe wird erfindungsgemäß durch das Verfahren gemäß Anspruch 7 gelöst.

Das erfindungsgemäße Verfahren weist vorzugsweise die vorstehend im Zusammenhang mit der erfindungsgemäßen Filteranlage beschriebenen Merkmale und/oder Vorteile auf.

Bei einer Ausgestaltung des erfindungsgemäßen Verfahrens ist vorgesehen, dass jedem Filterbereich eine Bereichssteuervorrichtung zugeordnet ist, mittels welcher die mindestens eine Filtervorrichtung des jeweiligen Filterbereichs im Wesentlichen unabhängig von der mindestens einen Filtervorrichtung des mindestens einen weiteren Filterbereichs gesteuert und/oder geregelt wird.

Vorteilhaft kann es sein, wenn die mindestens eine Filtervorrichtung des jeweiligen Filterbereichs mittels der zugeordneten Bereichssteuervorrichtung hinsichtlich eines Einbringvorganges und/oder hinsichtlich eines Abreinigungsvorganges im Wesentlichen unabhängig von der mindestens einen Filtervorrichtung des mindestens einen weiteren Filterbereichs gesteuert und/oder geregelt wird. Bei einem Einbringvorgang wird Filterhilfsmaterial oder ein System aus Lack-Overspray und Filterhilfsmaterial in den Rohgasstrom eingebracht. Bei einem Abreinigungsvorgang wird ein an mindestens einem Filterelement abgeschiedenes System aus Lack-Overspray und Filterhilfsmaterial von dem mindestens einen Filterelement abgereinigt.

Erfindungsgemäß ist vorgesehen, dass die Filteranlage eine Zuführvorrichtung zur Zuführung von Filterhilfsmaterial zu mindestens einer Filtervorrichtung und/oder eine Entnahmevorrichtung zur Entnahme von zumindest einem Teil des Systems aus Lack-Overspray und Filterhilfsmaterial aus mindestens einer Filtervorrichtung umfasst, wobei die Zuführung und/oder die Entnahme für die Filtervorrichtungen mehrerer Filterbereiche der Filteranlage mittels der Koordinierungsvorrichtung koordiniert wird.

Insbesondere kann vorgesehen sein, dass mittels der Koordinierungsvorrichtung die Zuführung und/oder die Entnahme für sämtliche Filtervorrichtungen sämtlicher Filterbereiche koordiniert wird.

Mittels der Koordinierungsvorrichtung wird erfasst, ob ein Beladungsgrad des Systems aus Lack-Overspray und Filterhilfsmaterial mit Lack-Overspray in mindestens einer Filtervorrichtung einen vorgegebenen Grenzwert übersteigt, wobei mittels der Koordinierungsvorrichtung ein zumindest teilweiser Austausch des Systems aus Lack-Overspray und Filterhilfsmaterial in den Filtervorrichtungen in derjenigen Reihenfolge gesteuert und/oder geregelt wird, in welcher ein Übersteigen des Grenzwertes für den Beladungsgrad bei den einzelnen Filtervorrichtungen erfasst wird.

Die Filteranlage umfasst vorzugsweise mindestens eine Kontrollvorrichtung, mittels welcher ein Beladungsgrad des Systems aus Lack-Overspray und Filterhilfsmaterial mit Lack-Overspray ermittelt wird, insbesondere um die Notwendigkeit eines Austauschs des Systems aus Lack-Overspray und Filterhilfsmaterial in einer bestimmten Filtervorrichtung zu ermitteln.

Vorzugsweise wird bei der Ermittlung der Notwendigkeit eines Austauschs des Systems aus Lack-Overspray und Filterhilfsmaterial in einer bestimmten Filtervorrichtung die seit dem letzten Austausch vergangene Zeitdauer, die Anzahl der seit dem letzten Austausch lackierten Werkstücke, die von einer Appliziereinheit zum Applizieren von Lack auf die Werkstücke abgegebene Lackmenge, die Position der Filtervorrichtung in der Filteranlage, die Position und/oder Ausrichtung der Appliziereinheit relativ zu den Werkstücken und/oder der Filtervorrichtung und/oder die Position der Werkstücke relativ zu der Filtervorrichtung berücksichtigt. Auf diese Weise kann das eingesetzte Filterhilfsmaterial optimal ausgenutzt werden. Insbesondere kann vermieden werden, dass noch brauchbares Filterhilfsmaterial vorzeitig entsorgt wird oder ein zu hoher Beladungsgrad des Systems aus Lack-Overspray und Filterhilfsmaterial mit Lack-Overspray in mindestens einer Filtervorrichtung zu unerwünschten Verunreinigungen, insbesondere Beschädigungen der Filterelemente, führt.

Zur Ermittlung des Beladungsgrades kann beispielsweise die Gesamtmasse des in einer Filtervorrichtung angeordneten Systems aus Lack-Overspray und Filterhilfsmaterial ermittelt werden. Bei zunehmendem Beladungsgrad wird eine derartige Messung jedoch zunehmend schwierig, so dass vorzugsweise weitere Parameter zur Ermittlung des Beladungsgrades hinzugezogen werden.

Beispielsweise kann vorgesehen sein, dass ein Austausch des Systems aus Lack-Overspray und Filterhilfsmaterial in regelmäßigen Zeitabständen erfolgt. Insbesondere kann ein Datenaustausch mit einer Werkstückfördervorrichtung und/oder einer Appliziereinheit der Lackieranlage vorgesehen sein, so dass als verstrichene Zeit lediglich diejenige Zeit erfasst wird, in welcher tatsächlich ein Lackiervorgang durchgeführt wird. Insbesondere kann auf diese Weise auf eine zu vorgegebenen Zeitpunkten anfallende Overspray-Menge reagiert werden. Ferner kann vorgesehen sein, dass als Zeitdauer zwischen zwei Austauschvorgängen ein Wert zentral vorgegeben wird.

Ferner kann zur Ermittlung des Beladungsgrades des Systems aus Lack-Overspray und Filterhilfsmaterial mit Lack-Overspray die Anzahl der die jeweilige Filtervorrichtung passierenden Werkstückträger (auch "Warenträger" oder bei als Fahrzeugkarossen ausgebildeten Werkstücken "Skid" genannt) und/oder die Anzahl der die Filtervorrichtung passierenden Werkstücke berücksichtigt werden. Vorzugsweise wird die Anzahl der zwischen zwei Austauschvorgängen die jeweilige Filtervorrichtung passierenden Werkstückträger und/oder Werkstücke individuell für jede Filtervorrichtung bestimmt, um die in den unterschiedlichen Abschnitten der Filteranlage auftretenden unterschiedlichen Lack-Overspray-Mengen zu berücksichtigen. Ferner kann vorgesehen sein, dass die zulässige Anzahl der Werkstückträger und/oder Werkstücke, welche die Filtervorrichtungen passieren dürfen, bevor ein weiterer Austausch initiiert wird, zentral vorgegeben wird.

Vorzugsweise wird bei der Ermittlung der Notwendigkeit eines Austauschs des Systems aus Lack-Overspray und Filterhilfsmaterial in einer bestimmen Filtervorrichtung die Ausflussmenge, die Position und/oder die Orientierung einer oder mehrerer Appliziereinheiten (Lackiervorrichtungen) zum Lackieren von Werkstücken, insbesondere eines Zerstäubers einer oder mehrerer Lackiervorrichtungen, berücksichtigt. Auf diese Weise kann ein Rückschluss darauf gezogen werden, welche Abschnitte der Filteranlage und somit welche Filtervorrichtungen der Filteranlage stärker oder geringer mit Lack-Overspray beaufschlagt werden.

Ferner kann vorgesehen sein, dass bei der Ermittlung der Notwendigkeit eines Austauschs des Systems aus Lack-Overspray und Filterhilfsmaterial in einer bestimmten Filtervorrichtung berücksichtigt wird, über welcher Filtervorrichtung eine Lackiervorrichtung, insbesondere ein Zerstäuber der Lackiervorrichtung, angeordnet ist. Auch hieraus kann auf einen erhöhten Anfall an Lack-Overspray in einer bestimmten Filtervorrichtung geschlossen werden.

Vorzugsweise werden mehrere Filtervorrichtungen zu einer virtuellen Einheit verbunden, um die Parameter bei der Ermittlung der Notwendigkeit eines Austauschs des Systems aus Lack-Overspray und Filterhilfsmaterial in einer bestimmten Filtervorrichtung einfacher ermitteln zu können.

Vorzugsweise können die zur Ermittlung der Notwendigkeit eines Austauschs des Systems aus Lack-Overspray und Filterhilfsmaterial in einer bestimmen Filtervorrichtung herangezogenen Parameter mittels einer speicherprogrammierbaren Steuerung (SPS) ausgewertet werden. Die Ergebnisse werden dann vorzugsweise mittels einer Schnittstellenvorrichtung an die Koordinierungsvorrichtung und/oder an eine oder mehrere der Bereichssteuervorrichtungen übergeben.

Bei einer Ausgestaltung der Erfindung ist vorgesehen, dass die tatsächlichen Lackierbereiche in einer Lackierkabine virtuellen Datenfächern zugeordnet werden, wobei für die einzelnen virtuellen Datenfächer berücksichtigt werden kann, ob in diesen Lack-Overspray bevorzugt anfällt, je nachdem, ob in der Lackierkabine eine horizontale Fläche und/oder eine vertikale Fläche eines Werkstücks und/oder dessen Innenraum und/oder Außenseite lackiert wird.

Beispielsweise sind zwei Reihen von virtuellen Trichtern und/oder virtuellen Datenfächern vorgesehen, wobei die virtuellen Trichter, die zugehörige Filtervorrichtung und/oder die virtuellen Datenfächer innerhalb einer Reihe bezüglich einer Förderrichtung von Werkstücken in der Lackierkabine hintereinander angeordnet sind. Zwischen zwei jeweils benachbarten Filtervorrichtungen, virtuellen Trichtern und/oder virtuellen Datenfächern können virtuelle Zwischen(-daten-)fächer gebildet werden, wobei der in die Zwischenfächer gelangende Lack-Overspray auf die danebenliegenden virtuellen Datenfächer aufgeteilt wird.

Bei einer Ausgestaltung der Erfindung ist vorgesehen, dass zur Ermittlung der Notwendigkeit eines Austauschs des Systems aus Lack-Overspray und Filterhilfsmaterial in einer bestimmten Filtervorrichtung die Gesamtmasse des in einem Aufnahmebehälter der Filtervorrichtung angeordneten Systems aus Lack-Overspray und Filterhilfsmaterial ermittelt wird.

Beispielsweise wird ein Absacken eines temporären Maximalgewichts (maximale Masse) nach einer Abreinigung aller Filterelemente einer Filtervorrichtung bei der Bestimmung der Notwendigkeit eines Austauschs berücksichtigt.

Vorteilhaft kann es sein, wenn mittels Wägung die Masse des in dem Aufnahmebehälter angeordneten Systems aus Lack-Overspray und Filterhilfsmaterial ermittelbar ist. Der Anteil der Masse des in dem Aufnahmebehälter angeordneten Systems aus Lack-Overspray und Filterhilfsmaterial an der Gesamtmasse des Systems aus Lack-Overspray und Filterhilfsmaterial in einer bestimmten Filtervorrichtung wird vorzugsweise als erfassbarer Massenanteil bezeichnet.

Der erfassbare Massenanteil wird vorzugsweise direkt, beispielsweise mittels einer Waage, oder indirekt, beispielsweise mittels einer Füllstandssensorik, ermittelt.

Vorteilhaft kann es sein, wenn ein Istwert für den ermittelten erfassbaren Massenanteil mit einem Sollwert verglichen wird. Insbesondere kann vorgesehen sein, dass ein Istwert für den erfassbaren Massenanteil mit einem vorgegebenen Maximum und/oder einem vorgegebenen Minimum für den Sollwert verglichen wird.

Vorteilhaft kann es sein, wenn das zeitliche Verhalten (der zeitliche Verlauf) der Werte für den erfassbaren Massenanteil, eine Massenzunahme und/oder eine Massenabnahme des erfassbaren Massenanteils ermittelbar sind. Eine Massenzunahme und eine Massenabnahme sind vorzugsweise durch die erste mathematische Ableitung der Kurve für den zeitlichen Verlauf des erfassbaren Massenanteils nach der Zeit ermittelbar. Insbesondere kann die Entwicklung des erfassbaren Massenanteils im Laufe der Zeit ausgewertet werden.

Vorzugsweise kann aus der zeitlichen Entwicklung der Werte des erfassbaren Massenanteils, insbesondere indirekt, auf die in der bestimmten Filtervorrichtung vorhandene Gesamtmasse des Systems aus Lack-Overspray und Filterhilfsmaterial geschlossen werden. Ferner kann durch eine Auswertung des zeitlichen Verlaufs der Werte für den erfassbaren Massenanteil vorzugsweise auf das physikalische und/oder chemische Verhalten des Systems aus Lack-Overspray und Filterhilfsmaterial in der Filtervorrichtung geschlossen werden.

Im Reinigungsbetrieb (Filterbetrieb) der Filtervorrichtung kommt vorzugsweise ständig Lack-Overspray hinzu, so dass die Gesamtmasse des Systems aus Lack-Overspray und Filterhilfsmaterial stetig zunimmt. Der Wert für den erfassbaren Massenanteil wird vorzugsweise am Ende eines Abreinigungsvorgangs vermerkt und mit einem oder mehreren, vorzugsweise zwei, vorangehend ermittelten Werten am Ende der vorhergehenden Abreinigungsvorgänge verglichen. Nimmt der erfassbare Massenanteil innerhalb einer Toleranz von beispielsweise ungefähr 2 kg zu, so gilt der Prozess als stabil und die Filtervorrichtung kann weiter im Reinigungsbetrieb (Filterbetrieb) betrieben werden. Nimmt der erfassbare Massenanteil jedoch im Vergleich zu den vorhergehend ermittelten Werten ab, beispielsweise innerhalb einer Toleranz von ungefähr 2 kg, so ist die maximale Aufnahmekapazität des Filterhilfsmaterials in dieser Filtervorrichtung erreicht. Es kann dann ein Alarm ausgelöst werden, so dass ein Austauschvorgang manuell initiiert werden kann. Vorzugsweise wird jedoch ein automatischer Austausch des Systems aus Lack-Overspray und Filterhilfsmaterial initiiert, insbesondere durch eine entsprechende Steuerung mittels der Koordinierungsvorrichtung.

Vorteilhaft kann es sein, wenn eine ermittelte Masse des Systems aus Lack-Overspray und Filterhilfsmaterial in dem Aufnahmebehälter direkt vor und direkt nach einem Abreinigungsvorgang ermittelt wird und die ermittelten Werte miteinander verglichen werden. Hierdurch kann auf den Beladungsgrad des Systems aus Lack-Overspray und Filterhilfsmaterial mit Lack-Overspray geschlossen werden, so dass rechtzeitig ein Austauschvorgang initiiert werden kann. Insbesondere kann dies den Vorteil bieten, dass mit einer Funktion einerseits die Abreinigung der Filterelemente sowie andererseits die Einbringung des Filterhilfsmaterials in den Rohgasstrom zum Beschichten der Filterelemente (Precoatieren) überwacht werden kann.

Ferner kann bei der Ermittlung der Notwendigkeit eines Austauschs des Systems aus Lack-Overspray und Filterhilfsmaterial in einer bestimmten Filtervorrichtung eine Massenänderung des Systems aus Lack-Overspray und Filterhilfsmaterial beim Einbringen des Systems aus Lack-Overspray und Filterhilfsmaterial in den Rohgasstrom berücksichtigt werden. Diese Massenänderung ist davon abhängig, welche Größe und/oder Masse die einzelnen Agglomerate aus Lack-Overspray und Filterhilfsmaterial jeweils aufweisen, weil die Masse und/oder die Größe der Agglomerate wiederum entscheidend dafür ist, ob diese Agglomerate im Rahmen des Einbringvorgangs in den Rohgasstrom eingebracht und an den Filterelementen abgeschieden werden können oder ob diese zurück auf den Boden der Filtervorrichtung, beispielsweise einen Filterhilfsmaterialaufnahmebehälter (auch "Aufnahmebehälter" genannt) sinken und somit bei der Massenbestimmung mit erfasst werden.

Vorzugsweise wird bei der Ermittlung der Masse des Systems aus Lack-Overspray und Filterhilfsmaterial lediglich derjenige Anteil des Systems aus Lack-Overspray und Filterhilfsmaterial berücksichtigt, welcher in einem Bodenbereich einer Filtervorrichtung, beispielsweise in einem Aufnahmebehälter einer Filtervorrichtung, angeordnet ist.

Durch die Aufwirbel- und Abreinigungsvorgänge ergibt sich eine Gewichtszunahme, wenn Filterhilfsmaterial von den Filterelementen auf die Waage fällt, und eine Gewichtsabnahme, wenn mit jedem Aufwirbelimpuls ein wenig Filterhilfsmaterial an die Filterelemente transportiert wird (in einzelnen ImpulsPause-Schritten, so lange, bis die Filtervorrichtung wieder mit Abreinigen an der Reihe ist). Speichert man nun den Wert für das Maximalgewicht am Ende der Abreinigung und vergleicht ihn einen Zyklus später mit dem Wert für das neue Maximalgewicht, so kann man folgende Erkenntnisse gewinnen:
Nimmt das Gewicht von Abreinigung zu Abreinigung zu, so kann das am Lackeintrag liegen, bis die Sättigung erreicht ist.

Nimmt das Gewicht von Abreinigung zu Abreinigung ab, so ist der Sättigungspunkt bereits überschritten, und das System aus Lack-Overspray und Filterhilfsmaterial wird klebrig. Somit fällt weniger Gemisch von den Filterelementen ab, als an sie gebracht worden ist. Bei Feststellung des zuvor beschriebenen Betriebszustands wird die entsprechende Filtervorrichtung vorzugsweise stillgesetzt und/oder einer Revision unterzogen. Gegebenenfalls kann auch ein Alarm ausgelöst werden.

Betrachtet man die Gewichtsabnahme während des Aufwirbeins, kann diese mit zwei Parametern ausgewertet werden. Dabei ist Parameter 1 das Gefälle in dm/dt in g/s. Parameter 2 ist das Zeitintervall, in dem gemessen wird. Daraus ergibt sich ein Gewichtsunterschied Δm innerhalb des Zeitintervalls, woraus folgende Erkenntnisse gewonnen werden können:
Ist die aus t und dm/dt errechnete Masse größer als ein vorher festgelegter Schwellwert (z.B. 7 g/s bei 5 min Intervall = 2,1 kg), läuft der Prozess stabil.

Ist die errechnete Masse kleiner, haben sich zu viele Agglomerate gebildet und die Impulsenergie zum Aufwirbeln ist nicht mehr stark genug, um das System aus Lack-Overspray und Filterhilfsmaterial an die Filterelemente zu transportieren. Entweder wird eine Warnung ausgegeben, oder die Filtervorrichtung meldet sich durch den Impuls automatisch zur Entleerung an. Nach erfolgter Abreinigung wird das System aus Lack-Overspray und Filterhilfsmaterial entleert, mit anschließender Befüllung.

Insbesondere dann, wenn sehr lange Zykluszeiten für Abreinigungsvorgänge, Einbringvorgänge und/oder Austauschvorgänge vorgesehen sind, kann vorgesehen sein, dass zur Ermittlung der Notwendigkeit eines Austauschs des Systems aus Lack-Overspray und Filterhilfsmaterial in einer bestimmten Filtervorrichtung ein vorgegebenes Zeitintervall, beispielsweise ungefähr 5 min, vorzugsweise ungefähr 3 min, welches für jede Filtervorrichtung individuell einstellbar ist, berücksichtigt wird. Insbesondere kann ein vorgegebenes Zeitintervall zentral in der Koordinierungsvorrichtung hinterlegt werden.

Günstig kann es sein, wenn die Notwendigkeit eines Austauschs des Systems aus Lack-Overspray und Filterhilfsmaterial in einer bestimmten Filtervorrichtung mit einem Sensor zur Ermittlung eines Beladungsgrades des Systems aus Lack-Overspray und Filterhilfsmaterial mit Lack-Overspray ermittelt wird.

Bei einer Ausgestaltung der Erfindung kann vorgesehen sein, dass mittels eines Sensors, beispielsweise eines in einer Abförderleitung der Entnahmevorrichtung angeordneten Sensors, eine Schüttdichte des entnommenen Systems aus Lack-Overspray und Filterhilfsmaterial ermittelbar ist. Hierdurch kann auf den Beladungsgrad des Systems aus Lack-Overspray und Filterhilfsmaterial mit Lack-Overspray geschlossen werden. Insbesondere kann der Sensor einen Schwellwert, der für den Austausch sorgt, z.B. Überschreitung eines Skidzählers, ein Zeitintervall, ein Maximalgewicht, einen Vergleich der Maximalgewichte nach der Abreinigung, einen Grenzwert dm/dt, automatisch anpassen. Da der Sensor vorzugsweise den Lackgehalt im System aus Lack-Overspray und Filterhilfsmaterial erkennen kann, kann somit auch erkannt werden, ob zu früh oder zu spät ausgetauscht wurde. Mit einer automatischen Anpassung der oben genannten Parameter wird somit die Anlage vorzugsweise regelbar, und/oder - zumindest zeitlich versetzt - die zum Betrieb nötigen Parameter müssen nicht mehr von Hand nachjustiert werden.

Mittels der Koordinierungsvorrichtung wird vorzugsweise die Bereitstellung von Druckluft zum Betreiben mindestens einer Filtervorrichtung, zum Betreiben einer Zuführvorrichtung zur Zuführung von Filterhilfsmaterial zu mindestens einer Filtervorrichtung und/oder zum Betreiben einer Entnahmevorrichtung zur Entnahme von zumindest einem Teil des Systems aus Lack-Overspray und Filterhilfsmaterial aus mindestens einer Filtervorrichtung koordiniert.

Die Förderung (Zuführung und/oder Entnahme) von Filterhilfsmaterial oder des Systems aus Lack-Overspray und Filterhilfsmaterial kann mittels Druckluft erfolgen. Da es sich hierbei vorzugsweise um eine Feststoffförderung handelt, wird vorzugsweise Förderluft durch Gebläse oder Ähnliches bereitgestellt, beispielsweise mittels eines Seitenkanalverdichters und/oder mittels Druckgebläsen und/oder Vakuumgebläsen. In diesem Fall wird Druckluft vorzugsweise noch immer für Zusatzfunktionen, wie eine Fluidisierung in einem Silo, die Filterabreinigung und so weiter, verwendet. Vorzugsweise werden sämtliche Funktionen, für welche Druckluft verwendet wird, miteinander koordiniert.

Vorzugsweise umfasst die Filteranlage eine Pneumatikvorrichtung, welche mittels der Koordinierungsvorrichtung, den Bereichssteuervorrichtungen und/oder den Filtervorrichtungssteuerungen gesteuert und/oder geregelt wird.

Die Pneumatikvorrichtung umfasst insbesondere eine Drucklufterzeugungsvorrichtung und eine Druckluftverteilungsvorrichtung, wobei mittels der Koordinierungsvorrichtung, den Bereichssteuervorrichtungen und/oder den Filtervorrichtungssteuerungen insbesondere Ventile der Druckluftverteilungsvorrichtung gesteuert und/oder geregelt werden.

Die Druckluft kann beispielsweise aus einem hauseigenen Druckluftnetz stammen. Alternativ oder ergänzend hierzu kann extra für die Trockenabscheidung ein eigener Druckluft-Generator oder dergleichen vorgesehen sein, der vorzugsweise unabhängig vom Druckluftnetz Druckluft zur Verfügung stellt.

Vorteilhaft kann es sein, wenn für mehrere Filtervorrichtungen, insbesondere für sämtliche Filtervorrichtungen eines Filterbereichs, stets soviel Druckluft bereitgestellt wird, wie zur Durchführung der Abreinigungsvorgänge und/oder Einbringvorgänge bei jeweils einer Filtervorrichtung, insbesondere einer Filtervorrichtung pro Filterbereich, notwendig ist. Auf diese Weise können in mehreren Filtervorrichtungen der Filteranlage, beispielsweise in jeweils einer Filtervorrichtung pro Filterbereich der Filteranlage, zeitgleich Abreinigungsvorgänge und/oder Einbringvorgänge durchgeführt werden. Insbesondere können hierdurch die Filterbereiche der Filteranlage unabhängig voneinander mittels der Bereichssteuervorrichtungen betrieben werden.

Für die Zuführvorrichtung und die Entnahmevorrichtung wird vorzugsweise nur soviel Druckluft bereitgestellt, dass zeitgleich zu nur einer Filtervorrichtung Filterhilfsmaterial zuführbar ist und aus nur einer Filtervorrichtung zumindest ein Teil des Systems aus Lack-Overspray und Filterhilfsmaterial entnehmbar ist.

Insbesondere wird mittels der Pneumatikvorrichtung für die Zuführvorrichtung und die Entnahmevorrichtung soviel Druckluft bereitgestellt, dass einer Filtervorrichtung Filterhilfsmaterial zugeführt werden kann, während aus einer weiteren Filtervorrichtung zumindest ein Teil des darin enthaltenen Systems aus Lack-Overspray und Filterhilfsmaterial entnommen wird.

Die erfindungsgemäße Filteranlage eignet sich insbesondere zur Durchführung des erfindungsgemäßen Verfahrens. Die vorliegende Erfindung betrifft daher insbesondere die Verwendung einer erfindungsgemäßen Filteranlage zur Durchführung des erfindungsgemäßen Verfahrens.

Die Filteranlage umfasst vorzugsweise eine Steuerung, mittels welcher ein oder mehrere Verfahrensschritte, insbesondere des erfindungsgemäßen Verfahrens, durchführbar sind.

Ferner können die erfindungsgemäße Filteranlage und/oder das erfindungsgemäße Verfahren die nachfolgend beschriebenen Merkmale und/oder Vorteile aufweisen:
Mittels der erfindungsgemäßen Filteranlage und/oder mittels des erfindungsgemäßen Verfahrens können vorzugsweise prozesstechnische Gesichtspunkte, wie insbesondere notwendigerweise einzuhaltende Prozesszeiten, berücksichtigt werden. Hierdurch wird eine Synchronisation mehrerer Pneumatikvorrichtungen miteinander vorzugsweise entbehrlich, so dass auf die Synchronisation vorzugsweise verzichtet wird.

Das gleichzeitige Öffnen einer Vielzahl von Ventilen der Druckluftverteilungsvorrichtung, welches zu einem Zusammenbrechen des Drucks der mittels der Pneumatikvorrichtung bereitgestellten Druckluft führen kann, wird vorzugsweise vermieden.

Mittels der erfindungsgemäßen Filteranlage und/oder des erfindungsgemäßen Verfahrens wird insbesondere die Entleerung und/oder das Befüllen von Filtervorrichtungen nach dem Ringzählerverfahren vermieden, so dass sich in der Wartephase einer Filtervorrichtung zur Durchführung eines Austauschvorganges zum Austauschen des Systems aus Lack-Overspray und Filterhilfsmaterial keine andere Filtervorrichtung in der Reihenfolge vor diese Filtervorrichtung schieben kann. Die für den zuverlässigen Betrieb der Filtervorrichtungen notwendige Reihenfolge bei der Durchführung der Austauschvorgänge kann vorzugsweise eingehalten werden.

Die erfindungsgemäße Filteranlage und/oder das erfindungsgemäße Verfahren ermöglichen vorzugsweise die Reduktion der zur Steuerung notwendigen Einzelparameter und/oder Programmierbausteine sowie Schnittstellenvorrichtungen.

Insbesondere werden prozessrelevante Einflüsse wie die Agglomeration des Systems aus Lack-Overspray und Filterhilfsmaterial, die Anhaftung an Oberflächen der Filtervorrichtungen, welche zu Messfehlern führen kann, und/oder fehlerhaftes Precoatieren oder Abreinigen der Filterelemente berücksichtigt.

Ein Aufbau der Filteranlage erfolgt vorzugsweise nach prozesstechnischen Gesichtspunkten, insbesondere erfolgt hierbei eine Dezentralisierung der Pneumatikvorrichtung.

Vorzugsweise ist jeder Filtervorrichtung eine Ventilinsel zugeordnet. Eine Ventilinsel ist vorzugsweise eine Ansammlung von pneumatischen Ventilen und/oder analogen und/oder digitalen Eingängen und/oder Ausgängen, die beispielsweise über ein internes Bussystem miteinander verbunden sind. Eine Verbindung zu einer SPS-Steuerung erfolgt vorzugsweise über einen Buskoppler, der insbesondere zugleich einen Master für das interne Bussystem darstellt.

Eine Ventilinsel ist vorzugsweise eine Zusammenfassung mehrerer Ventile auf einem Platz, beispielsweise auf einer gemeinsamen Platte. Der Vorteil kann darin liegen, dass die Luftversorgung der Ventile zentral erfolgen kann, das heißt, dass mit einem gemeinsamen Anschluss vorzugsweise alle Ventile der Ventilinsel versorgt werden können.

Vorzugsweise ist die elektrische Versorgung einer Ventilinsel ebenfalls zentralisiert.

Vorzugsweise wird die Filteranlage zentral von einem Steuerungssystem gesteuert. Das Steuerungssystem umfasst vorzugsweise ein zentrales Management (Koordinierungsvorrichtung), welches n Filterbereiche mit jeweils m Filtervorrichtungen koordiniert. Jeder Filterbereich ist vorzugsweise autark bezüglich eines Einbringvorganges (Aufwirbelung) und eines Abreinigungsvorganges. Die Filterbereiche können unterschiedliche Anzahlen an Filtervorrichtungen enthalten. Die Koordination von Funktionsgruppen eines Filterbereichs (Bereichsaktionen) ist vorzugsweise in einem Funktionsbaustein des jeweiligen Filterbereichs (Bereichssteuervorrichtung) integriert. Dieser Funktionsbaustein kann beispielsweise im Management aufgerufen werden.

Vorzugsweise können mehrere Managements (Koordinierungsvorrichtungen) und damit mehrere Steuersysteme mehrerer Filteranlagen auf ein gemeinsames Steinmehlversorgungssilo (Versorgungsbehälter) und/oder ein gemeinsames Restmaterialentsorgungssilo (Entsorgungsbehälter) und/oder ein oder mehrere gemeinsame Zwischenspeicher zugreifen.

Ein Versorgungsbehälter und/oder ein Entsorgungsbehälter kann aus mehreren miteinander verbundenen Einzelbehältern bestehen. Ferner kann vorgesehen sein, dass ein Versorgungsbehälter und/oder ein Entsorgungsbehälter über einen Mehrfachkonus mehrere Abgänge, das heißt Anschlussstellen, aufweist. Vorzugsweise führt jeder Abgang zu einer Filteranlage, welche ihrerseits vorzugsweise verschiedene Bereiche aufweist, so dass insbesondere mehrere Filteranlagen gleichzeitig aus einem Versorgungsbehälter gespeist werden können und/oder System aus Lack-Overspray und Filterhilfsmaterial aus mehreren Filteranlagen einem gemeinsamen Entsorgungsbehälter zuführbar ist.

Vorzugsweise ist ein Entsorgungsbehälter mit mehreren Totalabscheidern versehen, so dass aus mehreren Filteranlagen gleichzeitig System aus Lack-Overspray und Filterhilfsmaterial dem Entsorgungsbehälter zuführbar ist.

Vorzugsweise existiert ein Basisbaustein für eine Filtervorrichtung, wobei beispielsweise für n Filtervorrichtungen in einem kompletten Programm n Instanzen dieses Basisbausteins vorhanden sind. Im Managementbaustein (Koordinierungsvorrichtungsbaustein) gibt es vorzugsweise für jede Instanz einen Speicherbereich, innerhalb welchem ein Konfigurationsbit vorzugsweise automatisch gesetzt werden kann, wenn eine Instanz des Bausteins (Filtervorrichtung) vorhanden ist und diese Instanz aufgerufen wird. Wird eine Instanz aufgerufen, welche nicht vorhanden ist, bleibt das Konfigurationsbit vorzugsweise null.

Beispielsweise kann ein Abfrage- und/oder Anweisungssignal an eine Instanz des Filtervorrichtungsbausteins geschickt und darauf gewartet werden, dass diese Instanz die Rückmeldung liefert, dass die Funktion (Aktion) ausgeführt wurde. Wenn die Instanz nicht existent ist, wird die Rückmeldung vorzugsweise durch das Nichtvorhandensein dieser Instanz auch gegeben, nämlich durch den Wert null des Konfigurationsbits.

Vorzugsweise sind die Prozessparameter im Managementbaustein (in der Koordinierungsvorrichtung) zentralisiert. Insbesondere sind die Prozessparameter die Zeiten, insbesondere die Zyklusdauer, für einen Einbringvorgang, einen Fluidisierungsvorgang zur Fluidisierung des Systems aus Lack-Overspray und Filterhilfsmaterial in einer Filtervorrichtung, die Pausendauer zwischen zwei Abreinigungsvorgängen, etc. Auf die Vorgabe einer separaten Fluidisierdauer wird vorzugsweise verzichtet. Vielmehr erfolgt vorzugsweise eine Synchronisation der Fluidisierung mit der vorgegebenen Zeitdauer für den Einbringvorgang.

Vorzugsweise ist die Ansteuerungsroutine und/oder die Visualisierungsdaten mehrerer Aggregate (beispielsweise Filtervorrichtungen) einer Funktionsgruppe in einem Funktionsbaustein zusammengefasst. Ein Funktionsbaustein kann vorzugsweise auch nur einen Teil einer Funktionsgruppe betreffen, beispielsweise kann eine Entsorgungsbehälterentleerung mittels Lastkraftwagen als eigener Funktionsbaustein behandelt werden. Der Funktionsbaustein koordiniert vorzugsweise das Zusammenspiel mehrerer Aggregate. So kann beispielsweise eine Funktion "Entleeren des Entsorgungsbehälters mittels Lastkraftwagen" vorgesehen sein. Diese Entleerung geschieht wie folgt: Fährt ein Lastkraftwagen unter den Entsorgungsbehälter (Silo), wird ein Verladebalg über einem Einlassstutzen seitens des Lastkraftwagens positioniert und/oder fixiert, bis zum Beispiel ein Schlaffseilschalter das Okay gibt, dass der Balg richtig positioniert ist. Bei weiterer Betätigung des Knopfs wird dann vorzugsweise die Fluidisierung des Entsorgungsbehälters (Silo) und/oder einer Zellenradschleuse gestartet, damit das System aus Lack-Overspray und Filterhilfsmaterial in den Lastkraftwagen rutscht. Damit Luft aus dem Lastkraftwagen entweichen kann, können ein Entlüftungsventilator und/oder ein Entlüftungsventil aktiviert werden. Aus dem Lastkraftwagen entweichende Luft wird vorzugsweise über ein Filter und/oder ein Zyklon geleitet, wobei das Filter gegebenenfalls zyklisch abgereinigt wird.

Die Funktionsbausteine können ferner mehrere Schnittstellenvorrichtungen zu anderen Funktionsbausteinen des Steuersystems haben. Vorzugsweise wird ein Abreinigungsvorgang über den Bereichsbaustein im Managementbaustein koordiniert.

Der Abreinigungsvorgang erfolgt für jeden Filterbereich vorzugsweise wie folgt: In einer Filtervorrichtung werden nacheinander alle Filterelemente abgereinigt. Nach Beendigung der Abreinigung des letzten Filterelements einer Filtervorrichtung wird vorzugsweise zur nächsten Filtervorrichtung gesprungen. Im Managementbaustein wird, vorzugsweise parametrierbar, die Abreinigungsreihenfolge der Filtervorrichtungen vorgegeben. Die Reihenfolge ist vorzugsweise parametrierbar, um eine möglichst geringe Luftmengenverschiebung zwischen bereits abgereinigten und den noch nicht abgereinigten Filtervorrichtungen gewährleisten zu können. In entsprechender Weise kann eine Abreinigungsreihenfolge für die einzelnen Filterelemente einer Filtervorrichtung vorgesehen sein, um auch hier möglichst geringe Luftmengenverschiebungen zwischen den bereits abgereinigten und den noch nicht abgereinigten Filterelementen gewährleisten zu können.

Vorzugsweise umfasst jeder Filterbereich eine bestimmte Anzahl an Filtervorrichtungen. Nicht vorhandene Filtervorrichtungen können in der Koordinierungsvorrichtung durch Setzen des Filtermoduls an die Stelle null deaktiviert werden. Ebenso kann bei der Parametrierung der Reihenfolge der Abreinigung der Filterelemente einer Filtervorrichtung der Sollwert null vorgegeben werden, um die Abreinigung eines betreffenden Filterelements zu deaktivieren. Hierdurch können mit demselben Softwarebaustein vorzugsweise unterschiedliche Filterelementanzahlen und/oder unterschiedliche Filtervorrichtungsanzahlen und/oder verschiedene Herstellerkonstellationen abgedeckt werden.

Der Einbringvorgang (Aufwirbelung) und damit im Zusammenhang der Fluidisierungsvorgang werden vorzugsweise über den Bereichsbaustein (Bereichssteuervorrichtung) im Managementbaustein (Koordinierungsvorrichtung) koordiniert. Zur Kontrolle des Druckluftverbrauchs wird vorzugsweise vermieden, dass gleichzeitig viele Verbraucher einen Vorgang durchführen, bei welchem Druckluft benötigt wird. Hierzu wird vorzugsweise eine Reihenfolge für den Einbringvorgang in der Bereichssteuervorrichtung (Bereichsbaustein) vorgegeben, so dass die Filtervorrichtungen in einer, insbesondere konfigurierbaren, Reihenfolge 1 - n einen Einbringvorgang ausführen können. Zwischen der Durchführung der Vorgänge bei den einzelnen Filtervorrichtungen, beispielsweise zwischen zwei Einbringvorgängen, kann eine individuelle Pause eingestellt werden. Nach Beendigung des Vorgangs bei der n. Filtervorrichtung kann eine Generalpause für den Filterbereich eingestellt werden. Anschließend wird vorzugsweise erneut bei der ersten Filtervorrichtung mit weiteren Vorgängen (Aktionen) begonnen.

Vorzugsweise werden zur Stabilisierung des Prozesses der Trockenabscheidung die Grundfunktionen Precoatieren (Einbringvorgang), Fluidisieren und Filterabreinigung (Abreinigungsvorgang) optimiert. Ferner werden vorzugsweise zusätzliche Funktionen (Aktionen) hinzugefügt.

Beispielsweise kann ein Einbringvorgang und ein Fluidisierungsvorgang (Precoatieren und Fluidisieren) zu einer gemeinsamen Aktion zusammengefasst werden, wobei der Einbringvorgang vorzugsweise über ein eigenes Ventil, insbesondere ein Magnetventil, gesteuert wird. Die Prozesszeit hierfür wird vorzugsweise auf Werte zwischen ungefähr null und ungefähr zwanzig Sekunden, vorzugsweise zwischen ungefähr null und ungefähr zehn Sekunden, insbesondere zwischen ungefähr null und ungefähr einer Sekunde, optimiert.

Die Pausenzeit zwischen zwei Abreinigungsvorgängen zur Abreinigung der Filterelemente beträgt vorzugsweise zwischen ungefähr fünf Sekunden und ungefähr zehn Sekunden, insbesondere ungefähr sechs Sekunden.

Die Pausenzeiten hängen vorzugsweise von der Größe eines Abreinigungstanks ab. Die Pausenzeit ist insbesondere dafür zuständig, dass der Drucklufttank (Abreinigungstank) für die Abreinigung wieder, im Wesentlichen vollständig, gefüllt wird. Vorzugsweise ergeben sich folgende Prozesszeiten:
Die Anzahl der Filterelemente in einer Filtervorrichtung multipliziert mit der Pausenzeit ergibt vorzugsweise die Abreinigungszeit einer Filtervorrichtung.

Die Abreinigungszeit einer Filtervorrichtung multipliziert mit der Anzahl der Filtervorrichtungen eines Filterbereichs ergibt vorzugsweise die Gesamtzykluszeit.

Dies bedeutet, dass sich die Anzahl der Filtervorrichtungen eines Filterbereichs vorzugsweise durch die Gesamtzykluszeit begrenzt. Je länger die Gesamtzykluszeit (von einem Abreinigungsvorgang zum nächsten Abreinigungsvorgang derselben Filtervorrichtung), umso länger kann vorgesehen sein, dass Filterhilfsmaterial an die Filterelemente gebracht wird. Weiterhin kann dies bedeuten, dass je länger die Zeit ist, umso größer ist vorzugsweise das Vorratsbehältnis (Versorgungsbehälter) für Filterhilfsmaterial, um während der Gesamtzykluszeit nicht den Versorgungsbehälter leer zu fahren.

Vorzugsweise erfolgt zwischen den Abreinigungsvorgängen ein Einbringvorgang, insbesondere mit gleichzeitigem Fluidisierungsvorgang, welcher vorzugsweise nach einer Zeit zwischen ungefähr zwei Sekunden und ungefähr drei Sekunden nach dem Abreinigungsvorgang startet und vorzugsweise zwischen ungefähr einer Sekunde und ungefähr drei Sekunden dauert. Hierdurch kann ein frisch abgereinigtes Filterelement vorzugsweise sofort wieder mit einer Schicht aus Filterhilfsmaterial versehen und damit geschützt werden.

Es kann vorgesehen sein, dass in einem Filterbereich bei zwei Filtervorrichtungen gleichzeitig ein Abreinigungsvorgang durchgeführt wird. Dies ist vorzugsweise eine Ausnahme für den Fall, dass die zusätzlich abzureinigende Filtervorrichtung bereits einige Zeit zur Durchführung eines Austauschvorganges angemeldet ist. Um die zu entnehmende Menge des Systems aus Lack-Overspray und Filterhilfsmaterial zu maximieren und möglichst wenig bereits stark mit Lack-Overspray beladenes Filterhilfsmaterial mit frischem oder aufbereitetem Filterhilfsmaterial zu vermischen, wird der zusätzliche Abreinigungsvorgang vorzugsweise unmittelbar vor dem Entnahmevorgang durchgeführt.

Da nach der Befüllung einer Filtervorrichtung mit Filterhilfsmaterial die Reihenfolge der Einbringvorgänge an den Filtervorrichtungen des betreffenden Filterbereichs gerade an dieser neu befüllten Filtervorrichtung vorüber sein kann, wird vorzugsweise nach der Befüllung zur sofortigen Precoatierung der Filterelemente ein zusätzlicher Einbringvorgang gestartet.

Zur Minimierung des Druckluftverbrauchs werden pro Filterbereich vorzugsweise maximal die folgenden Funktionen (Aktionen) gleichzeitig zugelassen: In einer Filtervorrichtung wird ein Einbringvorgang mit zugehörigem Fluidisiervorgang durchgeführt. In einer weiteren Filtervorrichtung werden die Filterelemente vorzugsweise abgereinigt, das heißt ein Abreinigungsvorgang durchgeführt, wobei nach jedem Abreinigungsvorgang jedes einzelnen Filterelements vorzugsweise ein Zwischeneinbringvorgang zum Schutz der Filterelemente stattfindet. Eine Filtervorrichtung wird vorzugsweise entleert, das heißt, dass das System aus Lack-Overspray und Filterhilfsmaterial zumindest teilweise aus einer Filtervorrichtung entnommen wird. Während des Entnahmevorgangs wird vorzugsweise ein Fluidisiervorgang ohne einen Einbringvorgang dauerhaft durchgeführt. Alternativ hierzu kann auch ein getakteter Fluidisiervorgang vorgesehen sein. Ferner wird eine weitere Filtervorrichtung vorzugsweise befüllt, das heißt, dass dieser Filtervorrichtung, insbesondere aufbereitetes oder frisches, Filterhilfsmaterial zugeführt wird. Im Anschluss an diesen Zuführvorgang wird bei dieser Filtervorrichtung vorzugsweise ein Einbringvorgang gestartet. Eine weitere Filtervorrichtung ist vorzugsweise zur Entleerung (Entnahmevorgang) angemeldet. In dieser Filtervorrichtung werden außerhalb der vorgegebenen Reihenfolge für die Abreinigungsvorgänge zusätzlich die Filterelemente abgereinigt.

Die erfindungsgemäße Filteranlage und/oder das erfindungsgemäße Verfahren ermöglichen vorzugsweise die Einführung von autonomen und/oder autarken (Filter-)Bereichen, wobei vorzugsweise auf eine Synchronisation der Filterbereiche miteinander verzichtet wird. Es kann jedoch auch eine Synchronisation der Filterbereiche miteinander durchgeführt werden.

Ein Druckluftverbrauch der Filteranlage wird vorzugsweise reduziert. Die einzustellenden Parameter werden vorzugsweise durch eine Zentralisierung von Funktionen (Aktionen) und/oder Funktionsabläufen reduziert, wobei die Größe des zentralen Managementbausteins (Programmieraufwand der Koordinierungsvorrichtung) vorzugsweise so gering wie nötig gehalten wird.

Die Koordinierungsvorrichtung, die Bereichssteuervorrichtungen und/oder die Filtervorrichtungssteuerungen können, vorzugsweise durch eine Adaption der Software, beispielsweise auf verschiedenartig aufgebaute Filteranlagen, insbesondere mit einer unterschiedlichen Anzahl an Filtervorrichtungen, angepasst werden.

Vorzugsweise wird eine Filtervorrichtung, welche sich zuerst zur Durchführung eines Austauschvorganges anmeldet, zuerst entleert und befüllt, wobei, um konstante Prozesszeiten einhalten zu können, vorzugsweise gleichzeitig mehrere Aktionen gestartet werden.

Vorzugsweise ermöglicht die Visualisierung des FIFO-Prinzips und des Managementbausteins, schnell zwischen den verschiedenen Filtervorrichtungen, softwaretechnisch also zwischen den verschiedenen Instanzen des Bausteins, hin und her zu wechseln, um so schnell in den Prozess eingreifen zu können.

Falls Filtervorrichtungen konstruktiv angepasst bzw. geändert werden, beispielsweise wenn elektrische Komponenten, beispielsweise Motoren, insbesondere für Paddelmischer, Ventile, etc., hinzugefügt werden, werden vorzugsweise einzelne Funktionsbausteine angepasst, während andere Funktionsbausteine sowie der grundsätzliche Aufbau der Software vorzugsweise weitgehend unverändert weiterverwendet werden können.

Verschiedene Lackieranlagen können insbesondere im Bereich der jeweiligen Förderkonzepte gravierende Unterschiede aufweisen. So ist beispielsweise in einer ersten Anlage das Silo direkt für einen Lastkraftwagen (LKW) erreichbar, so dass zwischen Silo und LKW nur wenige Meter Abstand besteht, während beispielsweise in einer zweiten Anlage zwischen einem LKW-Ladeplatz und dem Silo ein Abstand von beispielsweise 50 Metern und mehr besteht, so dass ein gesondertes, fest installiertes Fördersystem zwischen Silo und Verladeplatz erforderlich werden kann. Entsprechend ist von Anlage zu Anlage eine Anpassung einzelner Funktionsbausteine insbesondere dann vorgesehen, wenn verschiedene Förderkonzepte in den Anlagen realisiert werden.

Der grundsätzliche Aufbau der Koordinierungsvorrichtung, der Bereichssteuervorrichtungen und/oder der Filtervorrichtungen kann vorzugsweise immer dann verwendet werden, wenn ein Steuersystem aus mehreren gleichen oder ähnlichen Einheiten besteht und eine oder mehrere Aktionen, die über die Software gestartet werden, ausgeführt werden sollen. Weiterhin können hierdurch viele Aktionen ausgeführt werden, welche von einem oder mehreren Parametern abhängig sind, insbesondere von einer vorgegebenen Zeit, einer vorgegebenen Anzahl der Komponenten, etc.

Grundsätzlich können auch einzelne Filterelemente unterschiedlicher Filtervorrichtungen filtervorrichtungsübergreifend abgereinigt werden. Beispielsweise kann vorgesehen sein, dass bei einer Filtervorrichtung ein Filterelement abgereinigt wird, dann zu einer weiteren Filtervorrichtung gesprungen wird, bei welcher ebenfalls ein Filterelement abgereinigt wird, usw. Dies geschieht vorzugsweise in einem Filterbereich, bis alle Filterelemente aller Filtervorrichtungen in diesem Filterbereich abgereinigt sind.

Eine Filtervorrichtung, welche zur Durchführung eines Austauschvorganges angemeldet ist, wird vorzugsweise aus dem normalen Abreinigungs- und Einbringbetrieb ausgeklinkt. Insbesondere setzt eine solche angemeldete Filtervorrichtung vorzugsweise für maximal einen Zyklus in dem Filterbereich aus.

Die beschriebene Filteranlage muss nicht zwangsweise einer einzigen Lackiervorrichtung zugeordnet sein. Vielmehr können mehrere Lackiervorrichtungen, beispielsweise mehrere Lackierlinien, für eine Filteranlage vorgesehen sein.

Vorzugsweise wird die Filteranlage in einem Normalbetrieb, welcher vorzugsweise ein Automatikbetrieb ist, durchgeführt. Für die Wartung oder Reinigung können jedoch auch einzelne Funktionsteile, insbesondere einzelne Filtervorrichtungen, manuell geschaltet werden und sind somit für den Automatikbetrieb vorzugsweise nicht verfügbar.

Bei manuellem Betrieb einer Zellenradschleuse werden zum Beispiel die anderen Signale, beispielsweise eine Anmeldung zur Durchführung eines Befüllungsvorganges, weiterverarbeitet, wobei vorzugsweise solange gewartet wird, bis die Zellenradschleuse wieder zur Verfügung steht.

Insbesondere dann, wenn einzelne Filtervorrichtungen manuell gesteuert werden, fallen diese vorzugsweise aus der Reihenfolge des Managements heraus und werden somit übersprungen. Wird beispielsweise bei einer Reihenfolge von Filtervorrichtungen 1 bis 5 die Filtervorrichtung 3 manuell betrieben, so resultiert hieraus eine neue Reihenfolge der Filtervorrichtungen 1, 2, 4, 5. Wird die Filtervorrichtung 3 wieder auf Automatik gestellt, so wird diese vorzugsweise automatisch wieder in die Reihenfolge des Managements aufgenommen.

Es kann vorgesehen sein, dass der Filtervorrichtung mindestens einfach oder bereits mehrfach aufbereitetes Filterhilfsmaterial, zum Beispiel thermisch aufbereitetes und/oder mechanisch aufbereitetes Filterhilfsmaterial, zugeführt wird.

Vorzugsweise kann mit der Kontrollvorrichtung alternativ oder zusätzlich zum Vergleich des Beladungsgrades mit einem vorgegebenen Grenzwert ermittelt, insbesondere überwacht, werden, ob das Filterhilfsmaterial den vorgegebenen Grenzwert erreichen kann oder ob durch die ein- oder mehrfache Aufbereitung das Potential des Filterhilfsmaterials zur Aufnahme von Lack-Overspray bereits erschöpft ist.

Vorzugsweise kann hierzu eine zeitliche Veränderung und/oder ein zeitlicher Verlauf des Beladungsgrades ermittelt, insbesondere überwacht, werden. Insbesondere dann, wenn die zeitliche Veränderung des Beladungsgrades einen vorgegebenen Wert unterschreitet, kann ein Austausch des Filterhilfsmaterials eingeleitet werden, insbesondere auch dann, wenn beispielsweise ein ermittelter Beladungsgrad noch unterhalb eines vorgegebenen Grenzwertes für den Beladungsgrad liegt.

Der ermittelte Beladungsgrad kann beispielsweise ein momentaner und/oder aktueller Beladungsgrad sein.

Vorzugsweise umfasst eine oder mehrere der Filtervorrichtungen, insbesondere jede Filtervorrichtung, alternativ oder ergänzend zur Kontrollvorrichtung, mittels welcher ein Beladungsgrad ermittelt werden kann, mindestens eine Kontrollvorrichtung, mittels welcher mindestens ein von dem Beladungsgrad verschiedener Parameter ermittelt werden kann. Dies kann zum Beispiel ein physikalischer Parameter sein, insbesondere eine mittlere Teilchengröße und/oder eine Korngrößenverteilung.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische vertikale Schnittdarstellung durch eine Lackieranlage zum Lackieren von Werkstücken, welche eine Filteranlage zum Abscheiden von Lack-Overspray aufweist;
- Fig. 2: eine schematische Darstellung der Filteranlage;
- Fig. 3: eine schematische Darstellung der Funktionsweise der Filteranlage bei der Durchführung von Bereichsaktionen;
- Fig. 4: eine schematische Darstellung der Funktionsweise der Filteranlage bei der Durchführung von Anlagenaktionen;
- Fig. 5: eine ergänzende schematische Darstellung der Funktionsweise der Filteranlage bei der Durchführung von Anlagenaktionen, wobei sechs Filtervorrichtungen der Filteranlage zur Durchführung eines Austauschvorganges bei einer Koordinierungsvorrichtung der Filteranlage angemeldet sind;
- Fig. 6: eine der Fig. 5 entsprechende schematische Darstellung der Funktionsweise der Filteranlage bei der Durchführung von Anlagenaktionen, wobei der Austauschvorgang bei der zuerst angemeldeten Filtervorrichtung durchgeführt wurde und die nachfolgend angemeldeten Filtervorrichtungen in der angemeldeten Reihenfolge nach vorne verschoben wurden;
- Fig. 7: eine schematische Darstellung von verschiedenen Zonen der Lackieranlage, die im Betrieb der Lackieranlage unterschiedlich mit LackOverspray beaufschlagt werden;
- Fig. 8: eine schematische perspektivische Darstellung von Filtervorrichtungen der Lackieranlage, welche in einer Innenzone angeordnet sind, wobei in dieser Innenzone ein Innenraum der Werkstücke lackiert wird; und
- Fig. 9: eine der Fig. 8 entsprechende schematische perspektivische Darstellung von Filtervorrichtungen der Lackieranlage, welche in einer Außenzone angeordnet sind, wobei in dieser Außenzone Außenseiten der Werkstücke lackiert werden.

Gleiche oder funktional äquivalente Elemente sind in sämtlichen Figuren mit denselben Bezugszeichen versehen.

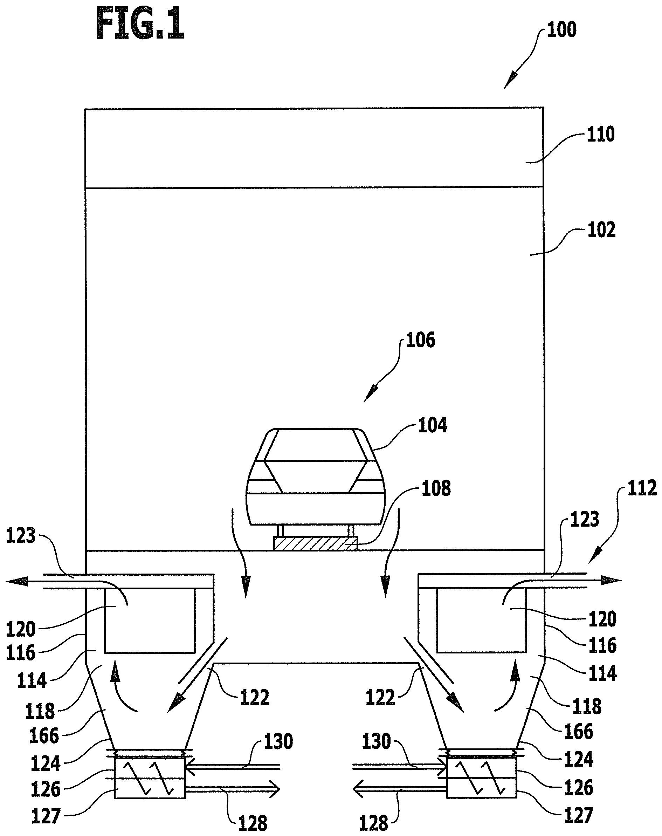

Eine in Fig. 1 dargestellte, als Ganzes mit 100 bezeichnete Lackieranlage umfasst eine Lackierkabine 102, in welcher Werkstücke 104, beispielsweise Fahrzeugkarosserien, mit Lack beaufschlagbar (lackierbar) sind.

Die Werkstücke 104 sind hierzu mittels einer Werkstückfördervorrichtung 108 einem Applizierbereich 106 der Lackierkabine 102 zuführbar und wieder entfernbar.

Die Lackieranlage 100 umfasst ferner ein über der Lackierkabine 102 angeordnetes Plenum 110, mittels welchem dem Applizierbereich 106 in der Lackierkabine 102 Luft zuführbar ist.

Ferner umfasst die Lackieranlage 100 eine unter der Lackierkabine 102 angeordnete Filteranlage 112, mittels welcher die durch den Applizierbereich 106 geführte Luft, die durch das Applizieren von Lack auf die Werkstücke 104 Lack-Overspray aufgenommen hat, gereinigt werden kann.

Die Filteranlage 112 umfasst mehrere Filtervorrichtungen 114.

Jede Filtervorrichtung 114 umfasst eine Einhausung 116, welche eine Rohgaskammer 118 begrenzt und in welcher mindestens ein Filterelement 120 angeordnet ist.

Ferner umfasst die Filtervorrichtung 114 einen Einlasskanal 122, durch welchen ein Rohgasstrom, welcher durch die durch den Applizierbereich 106 geführte, mit Lack-Overspray beaufschlagte Luft gebildet ist, in die Rohgaskammer 118 der Filtervorrichtung 114 einströmen kann.

Die Filtervorrichtung 114 ist als eine Trockenfiltervorrichtung ausgebildet, das heißt, dass eine Reinigung des Rohgasstroms im Wesentlichen ohne die Zugabe einer Flüssigkeit an den Filterelementen 120 erfolgt. Vielmehr kann dem Rohgasstrom ein Filterhilfsmaterial zugeführt werden, welches vorzugsweise einen Flüssigkeitsanteil in dem Lack-Overspray aufnimmt und zusammen mit dem Lack-Overspray an dem Filterelement 120 abgeschieden werden kann. Hierdurch wird ein Reingasstrom erhalten, welcher die Filtervorrichtung 114 durch eine Reingasleitung 123 verlässt.

Durch das Abscheiden des Systems aus Lack-Overspray und Filterhilfsmaterial wird an den Filterelementen 120 eine Sperrschicht oder eine Schutzschicht gebildet, welche einfach von den Filterelementen 120 abgereinigt werden kann.

Die Filtervorrichtung 114 ist somit eine regenerierbare Filtervorrichtung 114, welche ohne einen Austausch von Filterelementen 120 regeneriert und erneut verwendet werden kann.

Das von den Filterelementen 120 abgereinigte System aus Filterhilfsmaterial und Lack-Overspray kann in einem Aufnahmebehälter 124 der Filtervorrichtung 114, welcher unter den Filterelementen 120 angeordnet ist, aufgenommen werden.

Eine Filterhilfsmaterialeinbringeinrichtung 126 (nachfolgend "Einbringeinrichtung" genannt) ist beispielsweise durch eine Aufwirbeleinrichtung 127 in dem Aufnahmebehälter 124 gebildet und dient der Einbringung von Filterhilfsmaterial oder eines Systems aus Lack-Overspray und Filterhilfsmaterial in den durch die Rohgaskammer 118 strömenden Rohgasstrom.

Mittels einer Entnahmevorrichtung 128 kann das in dem Aufnahmebehälter 124 angeordnete System aus Lack-Overspray und Filterhilfsmaterial zumindest teilweise aus dem Aufnahmebehälter 124 entnommen werden.

Mittels einer Zuführvorrichtung 130 kann frisches oder aufbereitetes Filterhilfsmaterial der Filtervorrichtung 114 zugeführt werden.

Im Filterbetrieb der Filteranlage 112 wird das in den Filtervorrichtungen 114 angeordnete Filterhilfsmaterial im Laufe der Zeit immer stärker mit Lack-Overspray verunreinigt. Hierdurch wird die Fähigkeit des Filterhilfsmaterials, weiteren Lack-Overspray zu binden und somit eine permanente Verunreinigung der Filterelemente 120 zu vermeiden, beeinträchtigt.

In regelmäßigen Abständen muss daher das in den Filtervorrichtungen 114 angeordnete Filterhilfsmaterial durch frisches Filterhilfsmaterial ersetzt werden.

Grundsätzlich kann jedoch auch eine Aufbereitung des Systems aus Lack-Overspray und Filterhilfsmaterial erfolgen, so dass das bereits ein oder mehrfach verwendete Filterhilfsmaterial zumindest teilweise erneut als aufbereitetes Filterhilfsmaterial in der Filteranlage 112 verwendet werden kann.

Die in Fig. 1 dargestellte Lackieranlage 100 funktioniert wie folgt:
In dem Applizierbereich 106 der Lackierkabine 102 der Lackieranlage 100 wird ein Werkstück 104 lackiert, wodurch die durch die Lackierkabine 102 strömende Luft mit Lack-Overspray beaufschlagt wird.

Die mit Lack-Overspray beladene Luft wird als Rohgasstrom der Filteranlage 112 zugeführt.

Über die Einlasskanäle 122 wird der Rohgasstrom in die Rohgaskammern 118 der Filtervorrichtungen 114 der Filteranlage 112 geführt. Mittels Einbringeinrichtungen 126 wird Filterhilfsmaterial in den Rohgasstrom eingebracht.

Der Lack-Overspray aus dem Rohgasstrom lagert sich an das aufgewirbelte Filterhilfsmaterial und/oder an eine Schutzschicht aus Filterhilfsmaterial an dem mindestens einen Filterelement 120 einer jeden Filtervorrichtung 114 an und wird hierdurch aus dem Rohgasstrom abgeschieden.

Der so gereinigte Gasstrom verlässt dann die Filtervorrichtung 114 als Reingasstrom über die Reingasleitung 123.

Durch die Anlagerung von Lack-Overspray an das Filterhilfsmaterial wird die Funktion des Filterhilfsmaterials mit andauerndem Filterbetrieb der Filtervorrichtungen 114 zunehmend beeinträchtigt, so dass verbrauchtes Filterhilfsmaterial durch unverbrauchtes Filterhilfsmaterial ersetzt werden muss.

Hierzu ist mittels der Entnahmevorrichtung 128 und der Zuführvorrichtung 130 ein Austauschvorgang durchführbar.

Die in Fig. 1 dargestellten Filtervorrichtungen, die Zuführvorrichtung 130 und die Entnahmevorrichtung 128 werden mit Druckluft betrieben. Hierzu umfasst die Filteranlage 112 eine Pneumatikvorrichtung 132, welche eine Drucklufterzeugungsvorrichtung 134 und eine Druckluftverteilungsvorrichtung 136 umfasst.

Die Drucklufterzeugungsvorrichtung 134 dient der Bereitstellung von Druckluft, während die Druckluftverteilungsvorrichtung 136 der Verteilung der bereitgestellten Druckluft auf die Verbraucher dient.

Entsprechend dem Druckluftbedarf der Filteranlage 112 sind eine Vielzahl und/oder entsprechend groß dimensionierte Pneumatikvorrichtungen 132 vorgesehen.

Bei der in den Fig. 1 bis 9 dargestellten Filteranlage 112 ist ferner eine Koordinierungsvorrichtung 138 vorgesehen, mittels welcher verschiedene Aktionen der Filteranlage 112, insbesondere der Filtervorrichtungen 114, der Entnahmevorrichtung 128 und der Zuführvorrichtung 130 koordinierbar sind, um einen zu hohen Druckluftbedarf durch die gleichzeitige Durchführung vieler Aktionen bei den genannten Vorrichtungen zu vermeiden.

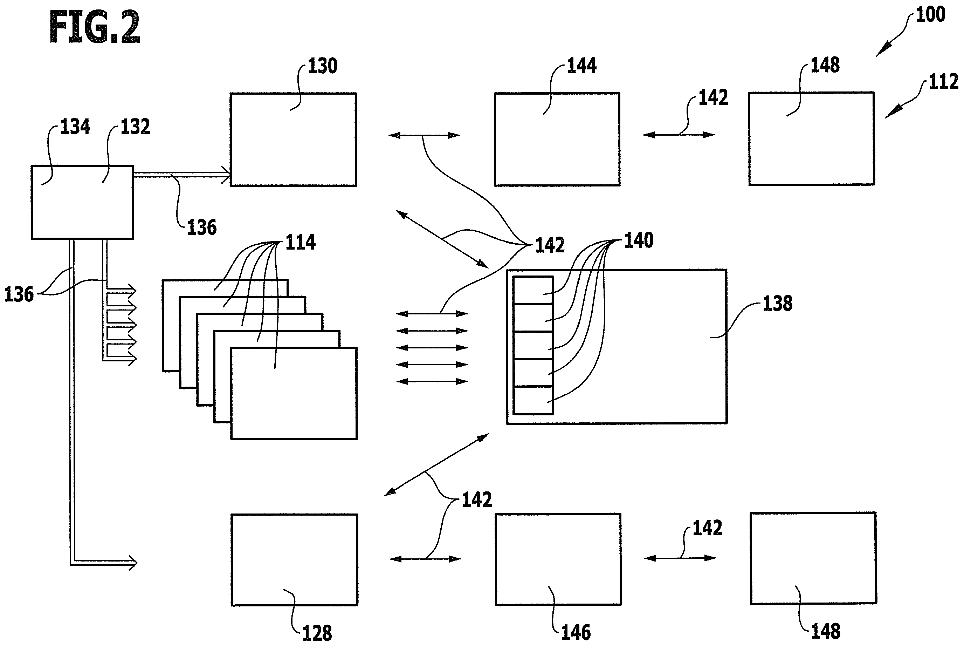

Wie insbesondere Fig. 2 zu entnehmen ist, umfasst die Koordinierungsvorrichtung 138 hierzu mehrere, beispielsweise fünf, Bereichssteuervorrichtungen 140, mittels welchen mehrere, beispielsweise fünf, Filterbereiche 143 der Filteranlage 112 gesteuert und/oder geregelt werden können.

Die Kommunikation der Koordinierungsvorrichtung 138 und der Bereichssteuervorrichtung 140 einerseits mit den Filtervorrichtungen 114, der Entnahmevorrichtung 128 und der Zuführvorrichtung 130 andererseits erfolgt mittels Schnittstellenvorrichtungen 142.

Die Schnittstellenvorrichtungen 142 sind dabei so ausgebildet, dass auf der Seite der Koordinierungsvorrichtung 138 Speicherbereiche für jede zu steuernde und/oder zu regelnde Vorrichtung vorgesehen sind und die jeweilige Vorrichtungsseite lediglich über Pointer angesprochen wird.

Die Schnittstellenvorrichtungen 142 ermöglichen insbesondere die Übertragung von Freigabesignalen, Sollwerten und/oder Funktionskontrollwerten.

Wie Fig. 2 ferner zu entnehmen ist, umfasst die Filteranlage 112 einen Versorgungsbehälter 144, mittels welchem frisches oder aufbereitetes Filterhilfsmaterial zur Zuführung desselben zu den Filtervorrichtungen 114 mittels der Zuführvorrichtung 130 bereitgestellt wird.

Ferner umfasst die Filteranlage 112 einen Entsorgungsbehälter 146, welchem das aus den Filtervorrichtungen 114 mittels der Entnahmevorrichtung 128 entnommene System aus Lack-Overspray und Filterhilfsmaterial zuführbar ist.

Mittels eines Lastkraftwagens 148 kann dem Versorgungsbehälter 144 frisches Filterhilfsmaterial zugeführt und/oder zu entsorgendes System aus Lack-Overspray und Filterhilfsmaterial aus dem Entsorgungsbehälter 146 abgeführt werden.

Der Aufbau der Steuerung der Filteranlage 112 sieht vor, dass die Koordinierungsvorrichtung 138 mittels Schnittstellenvorrichtungen 142 mit der Entnahmevorrichtung 128, der Zuführvorrichtung 130 und sämtlichen Filtervorrichtungen 114 kommunizieren kann. Insbesondere können mittels der Koordinierungsvorrichtung 138 hierdurch Aktionen der Filtervorrichtungen 114, der Entnahmevorrichtung 128 und/oder der Zuführvorrichtung 130 ausgelöst werden.

Die Entnahmevorrichtung 128 kann mittels einer Schnittstellenvorrichtung 142 unmittelbar mit dem Entsorgungsbehälter 146 kommunizieren. Der Entsorgungsbehälter 146 kann schließlich mittels einer Schnittstellenvorrichtung 142 mit einem Lastkraftwagen 148 zur Entleerung des Entsorgungsbehälters 146 kommunizieren.

Die Zuführvorrichtung 130 kann mittels einer Schnittstellenvorrichtung 142 unmittelbar mit dem Versorgungsbehälter 144 kommunizieren. Der Versorgungsbehälter 144 kann mittels einer weiteren Schnittstellenvorrichtung 142 mit einem Lastkraftwagen 148 kommunizieren, mittels welchem der Versorgungsbehälter 144 mit frischem oder aufbereitetem Filterhilfsmaterial befüllbar ist.

Grundsätzlich können bei der Filteranlage 112 Bereichsaktionen und Anlagenaktionen voneinander unterschieden werden.

In einem ersten Ausführungsbeispiel erhalten die Bereichssteuervorrichtungen 140 unabhängig voneinander Steuersignale von der Koordinierungsvorrichtung 138. Entsprechend können die Bereichssteuervorrichtungen 140 asynchron betrieben werden. In einem alternativen zweiten Ausführungsbeispiel werden die Bereichssteuervorrichtungen synchron betrieben und/oder über gemeinsame bzw. einheitliche Steuersignale angesteuert.

Mittels einer Bereichssteuervorrichtung 140 sind insbesondere in wechselnder Abfolge ein Abreinigungsvorgang und ein Einbringvorgang initiierbar. Beim Abreinigungsvorgang wird ein an den Filterelementen 120 der Filtervorrichtungen 114 anhaftendes System aus Lack-Overspray und Filterhilfsmaterial von den Filterelementen 120 abgereinigt. Bei einem Einbringvorgang werden Filterhilfsmaterial und/oder ein System aus Lack-Overspray und Filterhilfsmaterial in den Filtervorrichtungen 114 aufgewirbelt und insbesondere in den Rohgasstrom eingebracht.

Die Filtervorrichtungen 114 umfassen jeweils eine Abreinigungsvorrichtung 150 und die Einbringeinrichtung 126.

Mittels der Abreinigungsvorrichtung 150 sind Abreinigungsvorgänge durchführbar.

Mittels der Einbringeinrichtung 126 sind Einbringvorgänge (Aufwirbelvorgänge) durchführbar.

Jedem Filterbereich 143 sind mehrere Filtervorrichtungen 114, beispielsweise vier, insbesondere 14, Filtervorrichtungen 114 zugeordnet. Mittels der Bereichssteuervorrichtung 140 eines jeden Filterbereichs 143 können die Abreinigungsvorgänge und die Einbringvorgänge sämtlicher Filtervorrichtungen 114 des betreffenden Filterbereichs 143 gesteuert und/oder geregelt werden.

Die Abreinigungsvorgänge und die Einbringvorgänge sind somit Bereichsaktionen, welche mittels der Bereichssteuervorrichtung 140 gesteuert und/oder geregelt werden.

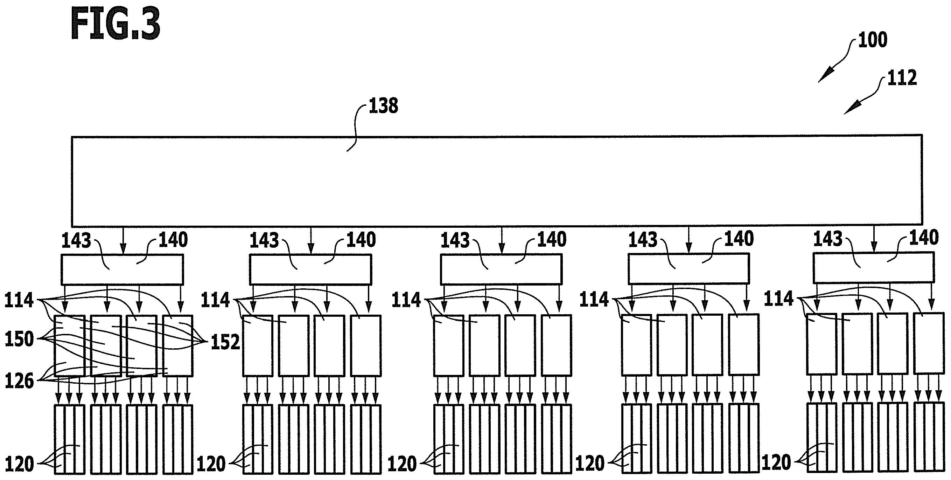

Wie insbesondere Fig. 3 zu entnehmen ist, umfassen die Filtervorrichtungen 114 jeweils mehrere, beispielsweise drei, vorzugsweise 18, Filterelemente 120, welche bei einem Abreinigungsvorgang nacheinander abgereinigt werden. Der Abreinigungsvorgang wird von der Bereichssteuervorrichtung 140 lediglich initiiert und mittels einer Filtervorrichtungssteuerung 152 einer jeden Filtervorrichtung 114 im Wesentlichen autonom durchgeführt. Insbesondere erfolgt nach der Initiierung des Abreinigungsvorganges durch die Bereichssteuervorrichtung 140 keine weitere diesbezügliche Kommunikation der Filtervorrichtung 114 mit der Bereichssteuervorrichtung 140.

Aufgrund der unabhängig voneinander arbeitenden Bereichssteuervorrichtungen 140 der einzelnen Filterbereiche 143 werden die Abreinigungsvorgänge und die Einbringvorgänge bei insgesamt fünf Filtervorrichtungen 114, nämlich bei jeweils einer Filtervorrichtung 114 pro Filterbereich 143, parallel zueinander durchgeführt, wobei keine Synchronisation der Aktionen bei den Filtervorrichtungen 114 der unterschiedlichen Filterbereiche 143 erfolgt.

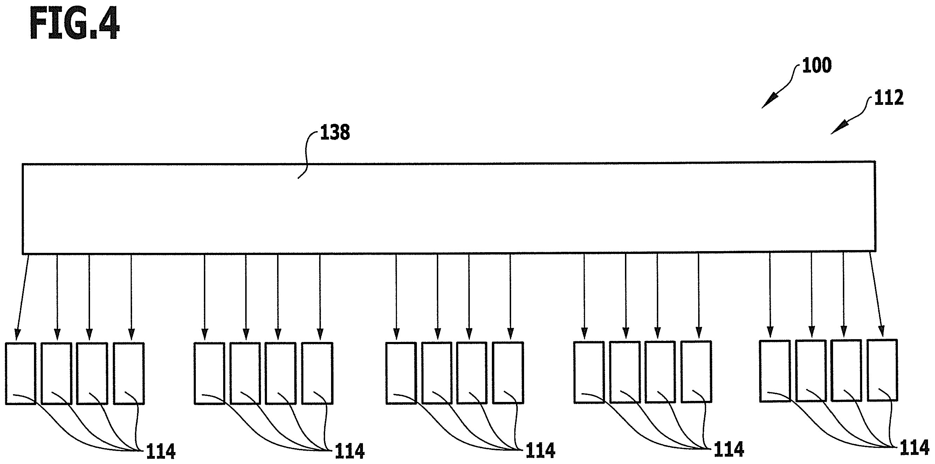

Fig. 4 ist zu entnehmen, dass die sogenannten Anlagenaktionen unmittelbar von der Koordinierungsvorrichtung 138 gesteuert und/oder geregelt werden, um die Anlagenaktionen bei sämtlichen Filtervorrichtungen 114 koordiniert durchzuführen.

Anlagenaktionen sind dabei die Zuführung von, insbesondere frischem oder aufbereitetem, Filterhilfsmaterial zu den Filtervorrichtungen 114 mittels der Zuführvorrichtung 130 und die Entnahme von zumindest einem Teil des Systems aus Lack-Overspray und Filterhilfsmaterial aus den Filtervorrichtungen 114 mittels der Entnahmevorrichtung 128.

Mittels der Koordinierungsvorrichtung 138 werden die Zuführvorgänge (Befüllung) und die Entnahmevorgänge (Entleerung) dabei derart koordiniert, dass jeweils lediglich eine Filtervorrichtung 114 entleert wird, das heißt, dass zumindest ein Teil des darin enthaltenen Systems aus Lack-Overspray und Filterhilfsmaterial aus der Filtervorrichtung 114 entnommen wird, und das lediglich eine Filtervorrichtung 114 zeitgleich befüllt wird, das heißt, dass der Filtervorrichtung 114 mittels der Zuführvorrichtung 130 frisches oder aufbereitetes Filterhilfsmaterial zugeführt wird.

Mittels der Koordinierungsvorrichtung 138 kann somit verhindert werden, dass zwei oder mehr Zuführvorgänge oder zwei oder mehr Entnahmevorgänge gleichzeitig durchgeführt werden.

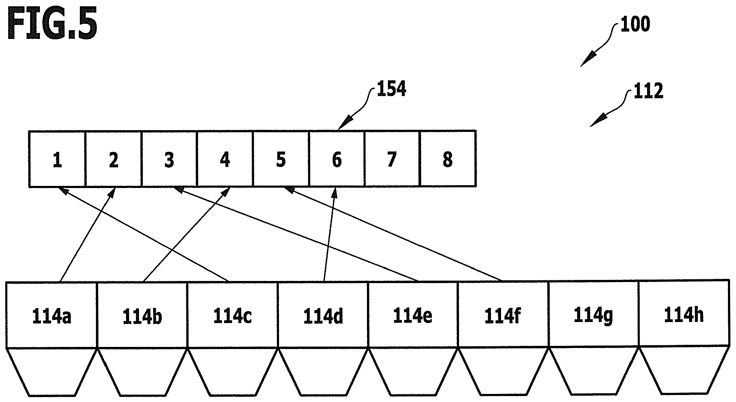

Wie Fig. 5 zu entnehmen ist, erfolgt die Koordinierung der Anlagenaktionen mittels einer FIFO-Speichervorrichtung 154 der Koordinierungsvorrichtung 138.

Die FIFO-Speichervorrichtung 154 ist Bestandteil der Koordinierungsvorrichtung 138 und speichert die zeitliche Reihenfolge, in welcher die Filtervorrichtungen 114 der gesamten Filteranlage 112 an die Koordinierungsvorrichtung 138 melden, dass ein Beladungsgrad des Systems aus Lack-Overspray und Filterhilfsmaterial mit Lack-Overspray einen vorgegebenen Grenzwert überschritten hat und somit ein Austauschvorgang durchgeführt werden soll.

Wie bei dem in Fig. 5 dargestellten Funktionsbeispiel deutlich wird, kann somit beispielsweise zunächst die Filtervorrichtung 114c sich zum Austauschvorgang anmelden. Die Filtervorrichtung 114c erscheint dann auf dem Speicherplatz 1 der FIFO-Speichervorrichtung 154. Gemäß Fig. 5 haben sich nach der Filtervorrichtung 114c die Filtervorrichtungen 114a, 114e, 114b, 114f und 114d für einen Austauschvorgang angemeldet, so dass diese Filtervorrichtungen 114 auf den entsprechenden Speicherplätzen 2 bis 6 der FIFO-Speichervorrichtung 154 erscheinen.

Die Filtervorrichtungen 114g und 114h haben sich bei diesem Beispiel noch nicht zum Austauschvorgang angemeldet, das heißt, dass der Beladungsgrad des Systems aus Lack-Overspray und Filterhilfsmaterial mit Lack-Overspray in diesen Filtervorrichtungen 114g, 114h einen vorgegebenen Grenzwert noch nicht überschritten hat. Die Speicherplätze 7 und 8 der FIFO-Speichervorrichtung 154 sind folglich noch leer.

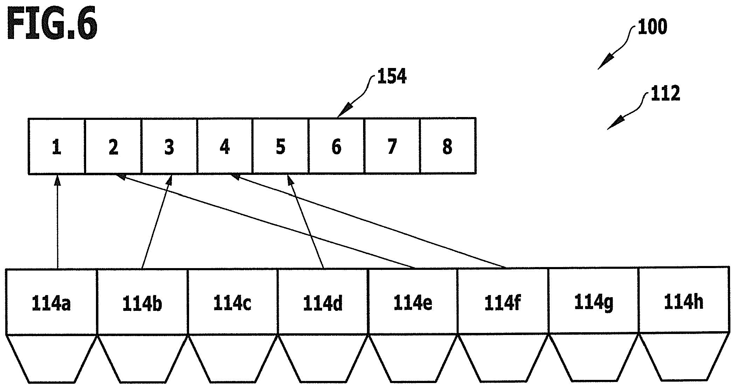

Ein Vergleich von Fig. 5 mit Fig. 6 zeigt, dass die zunächst auf Speicherplatz 1 erfasste Filtervorrichtung 114c nicht mehr bei der FIFO-Speichervorrichtung 154 registriert ist. Vielmehr sind die nachfolgenden Filtervorrichtungen 114a, 114e, 114b, 114f und 114d jeweils um einen Speicherplatz der FIFO-Speichervorrichtung 154 nach vorne verschoben worden.

Diese Verschiebung findet dann statt, wenn bei der auf Speicherplatz 1 erfassten Filtervorrichtung 114 ein Austauschvorgang vollständig durchgeführt wurde.

Grundsätzlich kann vorgesehen sein, dass bei der Filtervorrichtung 114, welche auf dem Speicherplatz 1 der FIFO-Speichervorrichtung 154 erfasst ist, zunächst ein Entnahmevorgang und anschließend ein Befüllungsvorgang durchgeführt wird, während bei den Filtervorrichtungen 114 auf den Speicherplätzen 2 und höher keine Anlagenaktion durchgeführt wird.

Vorzugsweise erfolgt jedoch bei der Filtervorrichtung 114, welche auf dem Speicherplatz 1 erfasst ist, ein Zuführvorgang. Der Entnahmevorgang wird vorzugsweise bereits dann durchgeführt, wenn die Filtervorrichtung 114 auf dem Speicherplatz 2 der FIFO-Speichervorrichtung 154 erfasst ist.

Die Filtervorrichtungen 114, welche auf den Speicherplätzen 3 und höher erfasst sind, sind vorzugsweise noch in einem Abreinigungs- und Einbringmodus, in welchem die mittels der Bereichssteuervorrichtung 114 gesteuerten Bereichsaktionen, nämlich Abreinigungsvorgänge und Einbringvorgänge, durchgeführt werden. Bei der Filtervorrichtung 114, welche auf dem Speicherplatz 3 erfasst ist, erfolgt zusätzlich jedoch eine Überprüfung, ob ein weiterer Abreinigungsvorgang notwendig ist, um einen möglichst vollständigen Austausch des darin enthaltenen Systems aus Lack-Overspray und Filterhilfsmaterial zu ermöglichen. Wenn diese Überprüfung ergibt, dass ein zusätzlicher Abreinigungsvorgang notwendig ist, so wird dieser Abreinigungsvorgang durchgeführt, solange die Filtervorrichtung auf dem Speicherplatz 3 der FIFO-Speichervorrichtung 154 erfasst ist.

Die Ermittlung, wann ein Austauschvorgang bei einer bestimmten Filtervorrichtung 114 durchgeführt werden muss, wird beispielsweise unter Zuhilfenahme von (nicht dargestellten) Sensoren durchgeführt. Ferner können hierzu Daten berücksichtigt werden, welche sich aus dem Aufbau der Lackieranlage 100 und/oder einem aktuellen Betriebsmodus der Lackieranlage 100 ermitteln und/oder ableiten lassen.

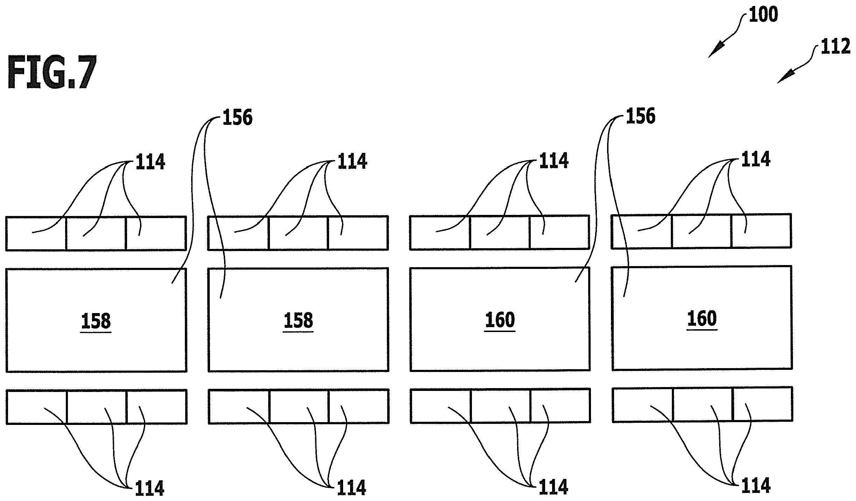

Wie den Fig. 7 bis 9 zu entnehmen ist, kann beispielsweise eine Einteilung der Filteranlage 112 in verschiedene Zonen 156 erfolgen.

Jeder Zone 156 können dabei eine oder mehrere, beispielsweise sechs, Filtervorrichtungen 114 zugeordnet sein.

Durch die Ermittlung der Art des Lackiervorgangs in der jeweiligen Zone 156 kann ein Rückschluss auf die in die einzelnen Filtervorrichtungen 114 der jeweiligen Zone 156 eingebrachten Mengen an Lack-Overspray gezogen werden.

Wie Fig. 7 zu entnehmen ist, können beispielsweise Innenzonen 158 und Außenzonen 160 voneinander unterschieden werden.

In den Innenzonen 158 wird ein Innenraum der Werkstücke 104, insbesondere ein Innenraum von Kraftfahrzeugkarosserien, lackiert, während in der Außenzone 160 die Werkstücke 104 auf ihrer Außenseite lackiert werden.

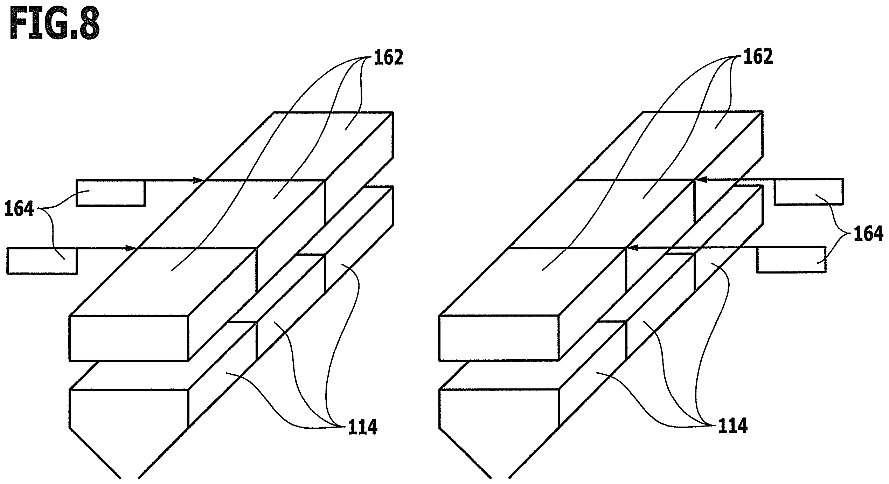

Fig. 8 ist eine perspektivische Darstellung einer Innenzone 158 samt der dieser Innenzone 158 zugeordneten Filtervorrichtungen 114.

Wie Fig. 8 zu entnehmen ist, kann der in der Innenzone 158 anfallende Lack-Overspray sogenannten virtuellen Datenfächern 162 zugeordnet werden. Jedem Datenfach 162 entspricht dabei eine Filtervorrichtung 114.

Zwischen zwei Datenfächern 162 sind sogenannte Zwischendatenfächer 164 vorgesehen. Der in dem durch die Zwischendatenfächer 164 vorgegebenen Raumbereich anfallende Lack-Overspray wird auf die benachbarten Datenfächer 162 verteilt.

Durch die Berechnung von Datenfächern 162 und Zwischendatenfächern 164 für die einzelnen Zonen 156 kann die Menge des in die jeweiligen Filtervorrichtungen 114 eingebrachten Lack-Oversprays exakter bestimmt werden. Hierdurch ergibt sich eine bessere Ausnutzung des für die Abscheidung des Lack-Overspray verwendeten Filterhilfsmaterials.

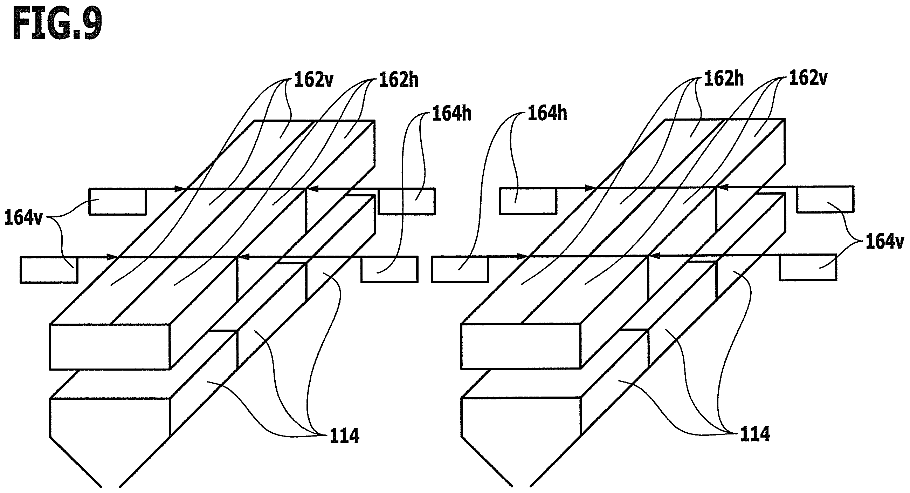

Wie Fig. 9 zu entnehmen ist, kann eine zusätzliche Verbesserung der Berechnung der Menge des pro Filtervorrichtung 114 anfallenden Lack-Oversprays dadurch erfolgen, dass beispielsweise für die Außenzonen 160 eine zusätzliche Unterteilung der Datenfächer 162 vorgenommen wird. Im Rahmen der Unterteilung der Datenfächer 162 wird unterschieden, ob die Lackierung, welche den anfallenden Lack-Overspray zur Folge hat, eine Lackierung von horizontalen Flächen des Werkstücks 104 und/oder von vertikalen Flächen des Werkstücks 104 beinhaltet.

Die Datenfächer 162 spalten sich hierdurch auf in Datenfächer 162h bei der Lackierung von horizontalen Flächen und Datenfächer 162v bei der Lackierung von vertikalen Flächen.

In entsprechender Weise ergibt sich eine Aufspaltung der Zwischendatenfächer 164 in Zwischendatenfächer 164h bei der Lackierung von horizontalen Flächen und in Zwischendatenfächer 164v bei der Lackierung von vertikalen Flächen.

Durch die Bestimmung der anfallenden Menge von Lack-Overspray in den Datenfächern 162, 162h, 162v und den Zwischendatenfächern 164, 164h, 164v kann die einer jeden Filtervorrichtung 114 zugeführte Menge an Lack-Overspray ermittelt werden, so dass das zum Betrieb der Filtervorrichtungen 114 notwendige Filterhilfsmaterial optimal ausgenutzt werden kann.

Eine optimale Ausnutzung des zum Betrieb der Filtervorrichtungen 114 notwendigen Filterhilfsmaterials ergibt sich insbesondere durch eine individuelle Anpassung der Betriebsdauer einer jeden Filtervorrichtung 114 zwischen der Durchführung zweier Austauschvorgänge.

Einerseits kann durch die Bestimmung der anfallenden Menge von Lack-Overspray in den Datenfächern 162, 162h, 162v und den Zwischendatenfächern 164, 164h, 164v eine voraussichtliche Beladung des Systems aus Lack-Overspray und Filterhilfsmaterial mit Lack-Overspray ermittelt werden.

Vorzugsweise umfasst jede Filtervorrichtung 114 jedoch eine Kontrollvorrichtung 166, mittels welcher ein Beladungsgrad des Systems aus Lack-Overspray und Filterhilfsmaterial mit Lack-Overspray, insbesondere mittels einer unmittelbaren Messung, ermittelt werden kann.

Die Ergebnisse der Ermittlung des Beladungsgrads des Systems aus Lack-Overspray und Filterhilfsmaterial mit Lack-Overspray in den Filtervorrichtungen 114 werden vorzugsweise mit einem vorgegebenen Grenzwert verglichen. Überschreitet der ermittelte Beladungsgrad den vorgegebenen Grenzwert, so wird die betreffende Filtervorrichtung 114 bei der Koordinierungsvorrichtung 138 für die Durchführung eines Austauschvorgangs angemeldet.

Es kann vorgesehen sein, dass der Filtervorrichtung 114 mindestens einfach oder bereits mehrfach aufbereitetes Filterhilfsmaterial, zum Beispiel thermisch aufbereitetes und/oder mechanisch aufbereitetes Filterhilfsmaterial, zugeführt wird.

Vorzugsweise kann mit der Kontrollvorrichtung 166 alternativ oder zusätzlich zum Vergleich des Beladungsgrades mit einem vorgegebenen Grenzwert ermittelt, insbesondere überwacht, werden, ob das Filterhilfsmaterial den vorgegebenen Grenzwert erreichen kann oder ob durch die ein- oder mehrfache Aufbereitung das Potential des Filterhilfsmaterials zur Aufnahme von Lack-Overspray bereits erschöpft ist.

Vorzugsweise kann hierzu eine zeitliche Veränderung und/oder ein zeitlicher Verlauf des Beladungsgrades ermittelt, insbesondere überwacht, werden. Insbesondere dann, wenn die zeitliche Veränderung des Beladungsgrades einen vorgegebenen Wert unterschreitet, kann ein Austausch des Filterhilfsmaterials eingeleitet werden, insbesondere auch dann, wenn beispielsweise ein ermittelter Beladungsgrad noch unterhalb eines vorgegebenen Grenzwertes für den Beladungsgrad liegt.

Der ermittelte Beladungsgrad kann beispielsweise ein momentaner und/oder aktueller Beladungsgrad sein.

Vorzugsweise umfasst eine oder mehrere der Filtervorrichtungen 114, insbesondere jede Filtervorrichtung 114, alternativ oder ergänzend zur Kontrollvorrichtung 166, mittels welcher ein Beladungsgrad ermittelt werden kann, mindestens eine Kontrollvorrichtung 166, mittels welcher mindestens ein von dem Beladungsgrad verschiedener Parameter ermittelt werden kann. Dies kann zum Beispiel ein physikalischer Parameter sein, insbesondere eine mittlere Teilchengröße und/oder eine Korngrößenverteilung.

Dadurch, dass die Filteranlage 112 eine Koordinierungsvorrichtung 138 umfasst, mittels welcher mindestens zwei Aktionen, insbesondere zwei Anlagenaktionen, mindestens zweier verschiedener Filtervorrichtungen 114 miteinander koordinierbar sind, kann eine bereitgestellte Druckluftmenge optimal ausgenutzt und die Filteranlage 112 somit zuverlässig betrieben werden.

## Patentansprüche

1. Filteranlage zum Reinigen eines mit Lack-Overspray beladenen Rohgasstroms, umfassend mindestens zwei Filterbereiche (143), welche jeweils mindestens eine Filtervorrichtung (114) umfassen, wobei zwei oder mehr Filtervorrichtungen (114) jeweils
- mindestens ein Filterelement (120), welchem Filterhilfsmaterial und zumindest ein Teil des mit Lack-Overspray beladenen Rohgasstroms zum Reinigen desselben zuführbar ist,
- mindestens eine Einbringeinrichtung (126) zum Einbringen von Filterhilfsmaterial oder eines Systems aus Lack-Overspray und Filterhilfsmaterial in den Rohgasstrom und
- mindestens eine Abreinigungsvorrichtung (150) zum Abreinigen eines an mindestens einem Filterelement (120) der mindestens einen Filtervorrichtung (114) abgeschiedenen Systems aus Lack-Overspray und Filterhilfsmaterial
umfassen,
**dadurch gekennzeichnet,**
**dass** die Filteranlage (112) eine Koordinierungsvorrichtung (138) umfasst, mittels welcher mindestens zwei Aktionen mindestens zweier verschiedener Filtervorrichtungen (114) miteinander koordinierbar sind, wobei die Filteranlage (112) eine Zuführvorrichtung (130) zur Zuführung von Filterhilfsmaterial zu den Filtervorrichtungen (114) und/oder eine Entnahmevorrichtung (128) zur Entnahme von zumindest einem Teil des Systems aus Lack-Overspray und Filterhilfsmaterial aus den Filtervorrichtungen (114) umfasst, wobei mittels der Koordinierungsvorrichtung (138) die Zuführung und/oder die Entnahme für die Filtervorrichtungen (114) mehrerer Filterbereiche (143) der Filteranlage (112) koordinierbar ist,
wobei mittels der Koordinierungsvorrichtung (138) erfassbar ist, ob ein Beladungsgrad des Systems aus Lack-Overspray und Filterhilfsmaterial mit Lack-Overspray in den Filtervorrichtungen (114) einen vorgegebenen Grenzwert übersteigt, und wobei mittels der Koordinierungsvorrichtung (138) ein zumindest teilweiser Austausch des Systems aus Lack-Overspray und Filterhilfsmaterial in den Filtervorrichtungen (114) in derjenigen Reihenfolge steuerbar und/oder regelbar ist, in welcher ein Übersteigen des Grenzwertes für den Beladungsgrad bei den einzelnen Filtervorrichtungen (114) erfasst wird.

2. Filteranlage nach Anspruch 1, **dadurch gekennzeichnet, dass** jedem Filterbereich (143) eine Bereichssteuervorrichtung (140) zugeordnet ist, mittels welcher die mindestens eine Filtervorrichtung (114) des jeweiligen Filterbereichs (143) im Wesentlichen unabhängig von der mindestens einen Filtervorrichtung (114) des mindestens einen weiteren Filterbereichs (143) steuerbar und/oder regelbar ist.

3. Filteranlage nach Anspruch 2, **dadurch gekennzeichnet, dass** die mindestens eine Filtervorrichtung (114) des jeweiligen Filterbereichs (143) mittels der zugeordneten Bereichssteuervorrichtung (140) hinsichtlich eines Einbringvorganges, bei welchem Filterhilfsmaterial oder ein System aus Lack-Overspray und Filterhilfsmaterial in den Rohgasstrom eingebracht wird, und/oder hinsichtlich eines Abreinigungsvorganges, bei welchem ein an mindestens einem Filterelement (120) abgeschiedenes System aus Lack-Overspray und Filterhilfsmaterial von dem mindestens einen Filterelement (120) abgereinigt wird, im Wesentlichen unabhängig von der mindestens einen Filtervorrichtung (114) des mindestens einen weiteren Filterbereichs (143) steuerbar und/oder regelbar ist.

4. Filteranlage nach einem der Ansprüche 1 bis 3, **dadurch gekennzeichnet, dass** die Filteranlage (112) mindestens eine Kontrollvorrichtung (166) umfasst, mittels welcher ein Beladungsgrad des Systems aus Lack-Overspray und Filterhilfsmaterial mit Lack-Overspray ermittelbar ist.

5. Filteranlage nach einem der Ansprüche 1 bis 4, **dadurch gekennzeichnet, dass** die Filteranlage (112) mindestens eine Kontrollvorrichtung (166) umfasst, mittels welcher ein zeitlicher Verlauf des Beladungsgrades des Systems aus Lack-Overspray und Filterhilfsmaterial mit Lack-Overspray ermittelbar ist.

6. Filteranlage nach einem der Ansprüche 1 bis 5, **dadurch gekennzeichnet, dass** die Filteranlage (112) mindestens eine Kontrollvorrichtung (166) umfasst, mittels welcher ein Beladungsgrad des Systems aus Lack-Overspray und Filterhilfsmaterial mit Lack-Overspray und/oder ein von dem Beladungsgrad verschiedener Parameter des Systems aus Lack-Overspray und Filterhilfsmaterial ermittelbar ist.

7. Verfahren zum Reinigen eines mit Lack-Overspray beladenen Rohgasstroms mittels einer Filteranlage (112), welche mindestens zwei Filterbereiche (143) umfasst, die jeweils mindestens eine Filtervorrichtung (114) umfassen, wobei zwei oder mehr Filtervorrichtungen (114) jeweils
- mindestens ein Filterelement (120), welchem Filterhilfsmaterial und zumindest ein Teil des mit Lack-Overspray beladenen Rohgasstroms zum Reinigen desselben zugeführt wird,
- mindestens eine Einbringeinrichtung (126) zum Einbringen von Filterhilfsmaterial oder eines Systems aus Lack-Overspray und Filterhilfsmaterial in den Rohgasstrom und
- mindestens eine Abreinigungsvorrichtung (150) zum Abreinigen eines an mindestens einem Filterelement (120) der mindestens einen Filtervorrichtung (114) abgeschiedenen Systems aus Lack-Overspray und Filterhilfsmaterial
umfassen,
**dadurch gekennzeichnet,**
**dass** mittels einer Koordinierungsvorrichtung (138) der Filteranlage (112) mindestens zwei Aktionen mindestens zweier verschiedener Filtervorrichtungen (114) miteinander koordiniert werden,
wobei die Filteranlage (112) eine Zuführvorrichtung (130) zur Zuführung von Filterhilfsmaterial zu den Filtervorrichtungen (114) und/oder eine Entnahmevorrichtung (128) zur Entnahme von zumindest einem Teil des Systems aus Lack-Overspray und Filterhilfsmaterial aus den Filtervorrichtungen (114) umfasst, wobei die Zuführung und/oder die Entnahme für die Filtervorrichtungen (114) mehrerer Filterbereiche (143) der Filteranlage (112) mittels der Koordinierungsvorrichtung (138) koordiniert wird,
wobei mittels der Koordinierungsvorrichtung (138) erfasst wird, ob ein Beladungsgrad des Systems aus Lack-Overspray und Filterhilfsmaterial mit Lack-Overspray in den Filtervorrichtungen (114) einen vorgegebenen Grenzwert übersteigt, und wobei mittels der Koordinierungsvorrichtung (138) ein zumindest teilweiser Austausch des Systems aus Lack-Overspray und Filterhilfsmaterial in den Filtervorrichtungen (114) in derjenigen Reihenfolge gesteuert und/oder geregelt wird, in welcher ein Übersteigen des Grenzwertes für den Beladungsgrad bei den einzelnen Filtervorrichtungen (114) erfasst wird.

8. Verfahren nach Anspruch 7, **dadurch gekennzeichnet, dass** jedem Filterbereich (143) eine Bereichssteuervorrichtung (140) zugeordnet ist, mittels welcher die mindestens eine Filtervorrichtung (114) des jeweiligen Filterbereichs (143) im Wesentlichen unabhängig von der mindestens einen Filtervorrichtung (114) des mindestens einen weiteren Filterbereichs (143) gesteuert und/oder geregelt wird.

9. Verfahren nach Anspruch 8, **dadurch gekennzeichnet, dass** die mindestens eine Filtervorrichtung (114) des jeweiligen Filterbereichs (143) mittels der zugeordneten Bereichssteuervorrichtung (140) hinsichtlich eines Einbringvorganges, bei welchem Filterhilfsmaterial oder ein System aus Lack-Overspray und Filterhilfsmaterial in den Rohgasstrom eingebracht wird, und/oder hinsichtlich eines Abreinigungsvorganges, bei welchem ein an mindestens einem Filterelement (120) abgeschiedenes System aus Lack-Overspray und Filterhilfsmaterial von dem mindestens einen Filterelement (120) abgereinigt wird, im Wesentlichen unabhängig von der mindestens einen Filtervorrichtung (114) des mindestens einen weiteren Filterbereichs (143) gesteuert und/oder geregelt wird.

10. Verfahren nach einem der Ansprüche 7 bis 9, **dadurch gekennzeichnet, dass** die Filteranlage (112) mindestens eine Kontrollvorrichtung (166) umfasst, mittels welcher ein Beladungsgrad des Systems aus Lack-Overspray und Filterhilfsmaterial mit Lack-Overspray ermittelt wird.

11. Verfahren nach Anspruch 10, **dadurch gekennzeichnet, dass** bei der Ermittlung der Notwendigkeit eines Austauschs des Systems aus Lack-Overspray und Filterhilfsmaterial in einer bestimmten Filtervorrichtung (114) die seit dem letzten Austausch vergangene Zeitdauer, die Anzahl der seit dem letzten Austausch lackierten Werkstücke (104), die von einer Appliziereinheit zum Applizieren von Lack auf die Werkstücke (104) abgegebene Lackmenge, die Position der Filtervorrichtung (114) in der Filteranlage (112), die Position und/oder Ausrichtung der Appliziereinheit relativ zu den Werkstücken (104) und/oder der Filtervorrichtung (114) und/oder die Position der Werkstücke (104) relativ zu den Filtervorrichtungen (114) berücksichtigt wird.

12. Verfahren nach einem der Ansprüche 7 bis 11, **dadurch gekennzeichnet, dass** mittels der Koordinierungsvorrichtung (138) die Bereitstellung von Druckluft zum Betreiben der Filtervorrichtungen (114), zum Betreiben einer Zuführvorrichtung (130) zur Zuführung von Filterhilfsmaterial zu den Filtervorrichtungen (114) und/oder zum Betreiben einer Entnahmevorrichtung (128) zur Entnahme von zumindest einem Teil des Systems aus Lack-Overspray und Filterhilfsmaterial aus den Filtervorrichtungen (114) koordiniert wird.

13. Verwendung einer Filteranlage (112) nach einem der Ansprüche 1 bis 6 zur Durchführung eines Verfahrens nach einem der Ansprüche 7 bis 12.

## Claims

1. A filtering system for cleaning a stream of untreated gas that is loaded with paint overspray, including at least two filtering regions (143) that each include at least one filtering device (114), wherein two or more filtering devices (114) each include
- at least one filter element (120) to which filtration aid and at least some of the stream of untreated gas that is loaded with paint overspray are suppliable for cleaning of the stream of untreated gas,
- at least one introducing device (126) for introducing filtration aid, or a system comprising paint overspray and filtration aid, into the stream of untreated gas, and
- at least one cleaning-off device (150) for cleaning off a system comprising paint overspray and filtration aid which has been separated off in at least one filter element (120) of the at least one filtering device (114),
**characterised in that**
the filtering system (112) includes a coordination device (138) by means of which at least two actions of at least two different filtering devices (114) are configured to be coordinated with one another,
wherein the filtering system (112) includes a supply device (130) for supplying filtration aid to the filtering devices (114) and/or a removal device (128) for removing at least some of the system comprising paint overspray and filtration aid from the filtering devices (114), wherein by means of the coordination device (138) the supply and/or removal is/are configured to be coordinated for the filtering devices (114) of a plurality of filtering regions (143) of the filtering system (112),
wherein it is detectable by means of the coordination device (138) whether a level to which the system comprising paint overspray and filtration aid in the filtering devices (114) is loaded with paint overspray exceeds a predetermined limit value, and wherein an at least partial exchange of the system comprising paint overspray and filtration aid in the filtering devices (114) is controllable and/or regulable by means of the coordination device (138) in the sequential order in which the fact that a loading level exceeds the limit value is detected in the individual filtering devices (114).

2. A filtering system according to Claim 1, **characterised in that** there is associated with each filtering region (143) a region control device (140) by means of which the at least one filtering device (114) of the respective filtering region (143) is controllable and/or regulable substantially independently of the at least one filtering device (114) of the at least one further filtering region (143).

3. A filtering system according to Claim 2, **characterised in that** the at least one filtering device (114) of the respective filtering region (143) is controllable and/or regulable substantially independently of the at least one filtering device (114) of the at least one further filtering region (143) by means of the associated region control device (140), in respect of an introducing procedure in which filtration aid or a system comprising paint overspray and filtration aid is introduced into the stream of untreated gas, and/or in respect of a cleaning-off procedure in which a system comprising paint overspray and filtration aid which has been separated off in at least one filter element (120) is cleaned off the at least one filter element (120).

4. A filtering system according to one of Claims 1 to 3, **characterised in that** the filtering system (112) includes at least one monitoring device (166) by means of which a level to which the system comprising paint overspray and filtration aid is loaded with paint overspray is determinable.

5. A filtering system according to one of Claims 1 to 4, **characterised in that** the filtering system (112) includes at least one monitoring device (166) by means of which a time profile of the level to which the system comprising paint overspray and filtration aid is loaded with paint overspray is determinable.

6. A filtering system according to one of Claims 1 to 5, **characterised in that** the filtering system (112) includes at least one monitoring device (166) by means of which a level to which the system comprising paint overspray and filtration aid is loaded with paint overspray and/or a parameter of the system comprising paint overspray and filtration aid that differs from the loading level is/are determinable.

7. A method for cleaning a stream of untreated gas that is loaded with paint overspray by means of a filtering system (112) which includes at least two filtering regions (143) that each include at least one filtering device (114), wherein two or more filtering devices (114) each include
- at least one filter element (120) to which filtration aid and at least some of the stream of untreated gas that is loaded with paint overspray are supplied for cleaning of the stream of untreated gas,
- at least one introducing device (126) for introducing filtration aid, or a system comprising paint overspray and filtration aid, into the stream of untreated gas, and
- at least one cleaning-off device (150) for cleaning off a system comprising paint overspray and filtration aid which has been separated off in at least one filter element (120) of the at least one filtering device (114),
**characterised in that**
at least two actions of at least two different filtering devices (114) are coordinated with one another by means of a coordination device (138) of the filtering system (112),
wherein the filtering system (112) includes a supply device (130) for supplying filtration aid to the filtering devices (114) and/or a removal device (128) for removing at least some of the system comprising paint overspray and filtration aid from the filtering devices (114), wherein by means of the coordination device (138) the supply and/or removal is/are coordinated for the filtering devices (114) of a plurality of filtering regions (143) of the filtering system (112), wherein it is detected by means of the coordination device (138) whether a level to which the system comprising paint overspray and filtration aid in the filtering devices (114) is loaded with paint overspray exceeds a predetermined limit value, and wherein an at least partial exchange of the system comprising paint overspray and filtration aid in the filtering devices (114) is controlled and/or regulated by means of the coordination device (138) in the sequential order in which the fact that a loading level exceeds the limit value is detected in the individual filtering devices (114).

8. A method according to Claim 7, **characterised in that** there is associated with each filtering region (143) a region control device (140) by means of which the at least one filtering device (114) of the respective filtering region (143) is controlled and/or regulated substantially independently of the at least one filtering device (114) of the at least one further filtering region (143).

9. A method according to Claim 8, **characterised in that** the at least one filtering device (114) of the respective filtering region (143) is controlled and/or regulated substantially independently of the at least one filtering device (114) of the at least one further filtering region (143) by means of the associated region control device (140), in respect of an introducing procedure in which filtration aid or a system comprising paint overspray and filtration aid is introduced into the stream of untreated gas, and/or in respect of a cleaning-off procedure in which a system comprising paint overspray and filtration aid which has been separated off in at least one filter element (120) is cleaned off the at least one filter element (120).

10. A method according to one of Claims 7 to 9, **characterised in that** the filtering system (112) includes at least one monitoring device (166) by means of which a level to which the system comprising paint overspray and filtration aid is loaded with paint overspray is determined.

11. A method according to Claim 10, **characterised in that**, when the need for exchanging the system comprising paint overspray and filtration aid in a particular filtering device (114) is determined, the period that has elapsed since the last exchange, the number of workpieces (104) that have been painted since the last exchange, the quantity of paint that has been discharged by an application unit for applying paint to the workpieces (104), the position of the filtering device (114) in the filtering system (112), the position and/or orientation of the application unit relative to the workpieces (104) and/or the filtering device (114), and/or the position of the workpieces (104) relative to the filtering devices (114) is/are taken into account.

12. A method according to one of Claims 7 to 11, **characterised in that** by means of the coordination device (138) the provision of compressed air for operating the filtering devices (114), for operating a supply device (130) for supplying filtration aid to the filtering devices (114) and/or for operating a removal device (128) for removing at least some of the system comprising paint overspray and filtration aid from the filtering devices (114) is coordinated.

13. The use of a filtering system (112) according to one of Claims 1 to 6 for performing a method according to one of Claims 7 to 12.

## Revendications

1. Installation de filtration pour le lavage d'un flux de gaz brut chargé de surpulvérisations de peinture, comprenant au moins deux zones de filtration (143), qui comprennent respectivement au moins un dispositif de filtre (114), dans laquelle les deux ou plus dispositifs de filtre (114) comprennent respectivement
- au moins un élément de filtre (120) auquel peuvent être amenées une matière auxiliaire de filtration et au moins une partie du flux de gaz brut chargé de surpulvérisations de peinture pour le lavage de ce dernier,
- au moins un système d'introduction (126) pour introduire la matière auxiliaire de filtration ou un système constitué de surpulvérisations de peinture et de matière auxiliaire de filtration dans le flux de gaz brut, et
- au moins un dispositif de nettoyage pour le nettoyage (150) d'un système constitué de surpulvérisations de peinture et de matière auxiliaire de filtration, déposé sur au moins un élément de filtre (120) du au moins un dispositif de filtre (114),
**caractérisée en ce que**
l'installation de filtration (112) comprend un dispositif de coordination (138) permettant de coordonner au moins deux actions d'au moins deux dispositifs de filtre (114) différents entre elles, l'installation de filtration (112) comprenant un dispositif d'alimentation (130) pour l'alimentation des dispositifs de filtre (114) en matière auxiliaire de filtration et/ou un dispositif de prélèvement (128) pour le prélèvement d'au moins une partie du système constitué de surpulvérisations de peinture et de matière auxiliaire de filtration hors des dispositifs de filtre (114), le dispositif de coordination (138) permettant de coordonner l'alimentation et/ou le prélèvement pour les dispositifs de filtre (114) de plusieurs zones de filtration (143) de l'installation de filtration (112),
le dispositif de coordination (138) permettant de détecter si un degré de chargement du système constitué de surpulvérisations de peinture et de matière auxiliaire de filtration avec des surpulvérisations de peinture dans les dispositifs de filtre (114) dépasse un seuil prédéterminé, et le dispositif de coordination (138) permettant de commander et/ou de réguler un remplacement au moins partiel du système constitué de surpulvérisations de peinture et de matière auxiliaire de filtration dans les dispositifs de filtre (114) dans l'ordre dans lequel est détecté un dépassement du seuil pour le degré de chargement dans les différents dispositifs de filtre (114).

2. Installation de filtration selon la revendication 1, **caractérisée en ce que** chaque zone de filtration (143) se trouve affectée d'un dispositif de commande de zone (140) permettant de commander et/ou de réguler le au moins un dispositif de filtre (114) de la zone de filtration respective (143) sensiblement indépendamment du au moins un dispositif de filtre (114) de la au moins une autre zone de filtration (143).

3. Installation de filtration selon la revendication 2, **caractérisée en ce que** le au moins un dispositif de filtre (114) de la zone de filtration respective (143) peut être commandé et/ou régulé au moyen du dispositif de commande de zone affecté (140) eu égard à une opération d'introduction, lors de laquelle la matière auxiliaire de filtration ou un système constitué de surpulvérisations de peinture et de matière auxiliaire de filtration est introduit dans le flux de gaz brut, et/ou eu égard à une opération de nettoyage, lors de laquelle un système constitué de surpulvérisations de peinture et de matière auxiliaire de filtration déposé sur au moins un élément de filtre (120) est nettoyé d'au moins un élément de filtre (120), sensiblement indépendamment du au moins un dispositif de filtre (114) de la au moins une autre zone de filtration (143).

4. Installation de filtration selon l'une des revendications 1 à 3, **caractérisée en ce que** l'installation de filtration (112) comprend au moins un dispositif de contrôle (166), permettant de déterminer un degré de chargement du système constitué de surpulvérisations de peinture et de matière auxiliaire de filtration avec des surpulvérisations de peinture.

5. Installation de filtration selon l'une des revendications 1 à 4, **caractérisée en ce que** l'installation de filtration (112) comprend au moins un dispositif de contrôle (166), permettant de déterminer une évolution temporelle du degré de chargement du système constitué de surpulvérisations de peinture et de matière auxiliaire de filtration avec des surpulvérisations de peinture.

6. Installation de filtration selon l'une des revendications 1 à 5, **caractérisée en ce que** l'installation de filtration (112) comprend au moins un dispositif de contrôle (166), permettant de déterminer un degré de chargement du système constitué de surpulvérisations de peinture et de matière auxiliaire de filtration avec des surpulvérisations de peinture et/ou un paramètre du système constitué de surpulvérisations de peinture et de matière auxiliaire de filtration, différent du degré de chargement.

7. Procédé de lavage d'un flux de gaz brut chargé de surpulvérisations de peinture au moyen d'une installation de filtration (112) comprenant au moins deux zones de filtration (143), qui comprennent respectivement au moins un dispositif de filtre (114), les deux ou plus dispositifs de filtre (114) comprenant respectivement
- au moins un élément de filtre (120) auquel peuvent être amenées une matière auxiliaire de filtration et au moins une partie du flux de gaz brut chargé de surpulvérisations de peinture pour le lavage de ce dernier,
- au moins un système d'introduction (126) pour introduire la matière auxiliaire de filtration ou un système constitué de surpulvérisations de peinture et de matière auxiliaire de filtration dans le flux de gaz brut, et
- au moins un dispositif de nettoyage pour le nettoyage (150) d'un système constitué de surpulvérisations de peinture et de matière auxiliaire de filtration, déposé sur au moins un élément de filtre (120) du au moins un dispositif de filtre (114),
**caractérisé en ce que**
un dispositif de coordination (138) de l'installation de filtration (112) permet de coordonner au moins deux actions d'au moins deux dispositifs de filtre (114) différents entre elles, l'installation de filtration (112) comprenant un dispositif d'alimentation (130) pour l'alimentation des dispositifs de filtre (114) en matière auxiliaire de filtration et/ou un dispositif de prélèvement (128) pour le prélèvement d'au moins une partie du système constitué de surpulvérisations de peinture et de matière auxiliaire de filtration hors des dispositifs de filtre (114), l'alimentation et/ou le prélèvement pour les dispositifs de filtre (114) de plusieurs zones de filtration (143) de l'installation de filtration (112) étant coordonné(s) au moyen du dispositif de coordination (138),
le dispositif de coordination (138) permettant de détecter si un degré de chargement du système constitué de surpulvérisations de peinture et de matière auxiliaire de filtration avec des surpulvérisations de peinture dans les dispositifs de filtre (114) dépasse un seuil prédéterminé, et le dispositif de coordination (138) permettant de commander et/ou de réguler un remplacement au moins partiel du système constitué de surpulvérisations de peinture et de matière auxiliaire de filtration dans les dispositifs de filtre (114) dans l'ordre dans lequel est détecté un dépassement du seuil pour le degré de chargement dans les différents dispositifs de filtre (114).

8. Procédé selon la revendication 7, **caractérisé en ce que** chaque zone de filtration (143) se trouve affectée d'un dispositif de commande de zone (140) permettant de commander et/ou de réguler le au moins un dispositif de filtre (114) de la zone de filtration respective (143) sensiblement indépendamment du au moins un dispositif de filtre (114) de la au moins une autre zone de filtration (143).

9. Procédé selon la revendication 8, **caractérisé en ce que** le au moins un dispositif de filtre (114) de la zone de filtration respective (143) peut être commandé et/ou régulé au moyen du dispositif de commande de zone affecté (140) eu égard à une opération d'introduction, lors de laquelle la matière auxiliaire de filtration ou un système constitué de surpulvérisations de peinture et de matière auxiliaire de filtration est introduit dans le flux de gaz brut, et/ou eu égard à une opération de nettoyage, lors de laquelle un système constitué de surpulvérisations de peinture et de matière auxiliaire de filtration déposé sur au moins un élément de filtre (120) est nettoyé d'au moins un élément de filtre (120), sensiblement indépendamment du au moins un dispositif de filtre (114) de la au moins une autre zone de filtration (143).

10. Procédé selon l'une des revendications 7 à 9, **caractérisé en ce que** l'installation de filtration (112) comprend au moins un dispositif de contrôle (166), permettant de déterminer un degré de chargement du système constitué de surpulvérisations de peinture et de matière auxiliaire de filtration avec des surpulvérisations de peinture.

11. Procédé selon la revendication 10, **caractérisé en ce que**, lors de la détermination de la nécessité d'un remplacement du système constitué de surpulvérisations de peinture et de matière auxiliaire de filtration dans un dispositif de filtre déterminé (114), le temps écoulé depuis le dernier remplacement, le nombre de pièces (104) mises en peinture depuis le dernier remplacement, la quantité de peinture émise par une unité d'application pour l'application de peinture sur les pièces (104), la position du dispositif de filtre (114) dans l'installation de filtration (112), la position et/ou l'orientation de l'unité d'application par rapport aux pièces (104) et/ou au dispositif de filtre (114) et/ou la position des pièces (104) par rapport aux dispositifs de filtre (114) est prise en compte.

12. Procédé selon l'une des revendications 7 à 11, **caractérisé en ce que** le dispositif de coordination (138) permet de coordonner la mise à disposition d'air comprimé pour le fonctionnement des dispositifs de filtre (114), pour le fonctionnement d'un dispositif d'alimentation (130) pour l'alimentation des dispositifs de filtre (114) en matière auxiliaire de filtration et/ou pour le fonctionnement d'un dispositif de prélèvement (128) pour le prélèvement d'au moins une partie du système constitué de surpulvérisations de peinture et de matière auxiliaire de filtration hors des dispositifs de filtre (114).

13. Utilisation d'une installation de filtration (112) selon l'une des revendications 1 à 6 pour la réalisation d'un procédé selon l'une des revendications 7 à 12.
